(19)

Europäisches Patentamt

European Patent Office

Office européen des brevets

(11) **EP 4 415 440 A1**

(12) **EUROPEAN PATENT APPLICATION**

published in accordance with Art. 153(4) EPC

(43) Date of publication:
**14.08.2024 Bulletin 2024/33**

(21) Application number: **22889375.6**

(22) Date of filing: **03.11.2022**

(51) International Patent Classification (IPC):
**H04W 68/00** (2009.01)   **H04W 68/02** (2009.01)

(52) Cooperative Patent Classification (CPC):
**H04W 68/00; H04W 68/02; H04W 72/044;**
**Y02D 30/70**

(86) International application number:
**PCT/CN2022/129572**

(87) International publication number:
**WO 2023/078354 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.11.2021 CN 202111309088**
**17.11.2021 CN 202111365256**
**14.02.2022 CN 202210134093**

(71) Applicant: **Huawei Technologies Co., Ltd.**
**Shenzhen, Guangdong 518129 (CN)**

(72) Inventors:
• ZHOU, Han
  Shenzhen, Guangdong 518129 (CN)
• TIE, Xiaolei
  Shenzhen, Guangdong 518129 (CN)
• XUE, Yifan
  Shenzhen, Guangdong 518129 (CN)
• LUO, Zhihu
  Shenzhen, Guangdong 518129 (CN)

(74) Representative: **Maiwald GmbH**
**Engineering**
**Elisenhof**
**Elisenstrasse 3**
**80335 München (DE)**

(54) **COMMUNICATION METHOD AND APPARATUS**

(57)     Embodiments of this application provide a communication method and apparatus. The method includes: A network device determines, based on a quantity of all POs associated with a first PEI and a quantity of bits of a PI field in the first PEI, a quantity of subgroups included in each of all the POs associated with the first PEI; the network device determines a bit value of each bit in the PI field based on the quantity of subgroups included in each of all the POs associated with the first PEI; and the network device sends the first PEI to a terminal device. In comparison with the solution in this application, if the network device determines a quantity of bits of a PI field based on a quantity of PFs associated with a PEI and a quantity of POs included in each PF, the quantity of bits of the PI field may be excessively large. Therefore, according to the solution in this application, the quantity of bits of the PI field is not excessively large, to ensure that the PEI is well received.

```
     ┌──────────┐                              ┌──────┐
     │   Base   │          Method 200          │ UE #1│
     │station #1│                              └──────┘
     └──────────┘
  ┌─────────────────────────┐        ┌─────────────────────────┐
  │ S210: Determine, based  │        │ S220: Determine a        │
  │ on a quantity of all    │        │ location of a target bit │
  │ POs associated with a   │        │ in the PI field of the   │
  │ first PEI and a quantity│        │ first PEI based on the   │
  │ of bits of a PI field in│        │ quantity of all POs      │
  │ the first PEI, a        │        │ associated with the first│
  │ quantity of subgroups   │        │ PEI and the quantity of  │
  │ included in each of all │        │ bits of the PI field in  │
  │ the POs associated with │        │ the first PEI            │
  │ the first PEI           │        └─────────────────────────┘
  └─────────────────────────┘
  ┌─────────────────────────┐
  │ S230: Determine a bit   │
  │ value of each bit in the│
  │ PI field of the first   │
  │ PEI based on the        │
  │ quantity of subgroups   │
  │ included in each of all │
  │ the POs associated with │
  │ the first PEI           │
  └─────────────────────────┘
         S240: Send the first PEI
     ──────────────────────────────────────────────►
                                    ┌─────────────────────────┐
                                    │ S250: Determine, based on│
                                    │ the first PEI and the    │
                                    │ target bit, whether to   │
                                    │ monitor a paging message │
                                    └─────────────────────────┘

                    FIG. 2
```

EP 4 415 440 A1

**Description**

This application claims priorities to Chinese Patent Application No. 202111309088.1, filed with the China National Intellectual Property Administration on November 5, 2021 and entitled "COMMUNICATION METHOD AND APPARATUS"; to Chinese Patent Application No. 202111365256.9, filed with the China National Intellectual Property Administration on November 17, 2021 and entitled "COMMUNICATION METHOD AND APPARATUS"; and to Chinese Patent Application No. 202210134093.1, filed with the China National Intellectual Property Administration on February 14, 2022 and entitled "COMMUNICATION METHOD AND APPARATUS", which are incorporated herein by reference in their entireties.

**TECHNICAL FIELD**

This application relates to the field of communication technologies, and more specifically, to a communication method and apparatus.

**BACKGROUND**

To resolve a power consumption problem of receiving paging by a terminal in an idle (idle) state and an inactive (inactive) state, 3GPP introduces a paging early indication (paging early indication, PEI). A paging indication (paging indication, PI) field in the PEI indicates a terminal corresponding to a paging occasion (paging occasion, PO) in a paging frame (paging frame, PF) or whether a terminal in a terminal subgroup corresponding to a PO monitors a paging message. However, a current protocol does not specify a manner of mapping the PO in the PF or different terminal subgroups in the PO to the PIfield, and consequently, the PEI may require a large quantity of bits. When the quantity of bits of the PEI is large, receiving performance of the PEI and a use range of the PEI may be affected. Therefore, how to enable the quantity of bits of the PEI to be within an appropriate range is an urgent problem to be resolved.

**SUMMARY**

According to a first aspect, a communication method is provided, including:
a network device determines, based on a quantity of all POs associated with a first paging indication and a quantity of bits of a PI field in the first paging indication, a quantity of subgroups included in each of all the POs associated with the first paging indication; the network device determines a bit value of each bit in the PI field based on the quantity of subgroups included in each of all the POs associated with the first paging indication and whether paging exists in a terminal device in each of subgroups included in all the POs associated with the first paging indication; and the network device sends the first paging indication to a terminal device.
According to the solution in this application, the network device determines, based on a quantity of bits of a PI field and a quantity of POs associated with a paging indication, a quantity of subgroups included in each PO. In comparison with the solution in this application, if the network device determines a quantity of bits of a PI field based on a quantity of PFs associated with a paging indication, a quantity of POs included in each PF, and a quantity of subgroups included in each PO, the quantity of bits of the PI field may be excessively large. Therefore, according to the solution in this application, the quantity of bits of the PI field is not excessively large, to ensure that the paging indication is well received.
With reference to the first aspect, in some implementations of the first aspect, the method further includes:
the network device sends first information and second information to the terminal device, where the first information indicates the quantity of all POs associated with the first paging indication or a quantity of PFs associated with the first paging indication, and the second information indicates the quantity of bits of the PI field in the first paging indication.
With reference to the first aspect, in some implementations of the first aspect, the method further includes:
the network device determines, based on the quantity of paging frames PFs associated with the first paging indication and a quantity of POs included in each PF, the quantity of all POs associated with the first paging indication.
With reference to the first aspect, in some implementations of the first aspect, the quantity of bits of the PI field is related to the quantity of all POs associated with the first paging indication.
With reference to the first aspect, in some implementations of the first aspect, that the quantity of bits of the PI field is related to the quantity of all POs associated with the first paging indication includes:
when the quantity of all POs associated with the first paging indication is less than or equal to a first value, the quantity of bits of the PI field is a second value; or when the quantity of all POs associated with the first paging indication is greater than a first value, the quantity of bits of the PI field is a third value, and the third value is greater than a second value.
With reference to the first aspect, in some implementations of the first aspect, the quantity of bits of the PI field is less than or equal to a specific threshold.
With reference to the first aspect, in some implementations of the first aspect, the specific threshold is associated with a quantity of bits of downlink control information (DCI) of a paging physical downlink control channel (PDCCH).

According to a second aspect, a communication method is provided, including:

a terminal device determines, based on a quantity of all paging occasions POs associated with a first paging indication and a quantity of bits of a PI field in the first paging indication, a location of a target bit in the PI field; the terminal device receives the first paging indication from a network device; and the terminal device determines, based on the first paging indication and the target bit, whether to monitor a paging message.

With reference to the second aspect, in some implementations of the second aspect, the method further includes: the terminal device determines a target PO to which the terminal device belongs.

That a terminal device determines, based on a quantity of all POs associated with a first paging indication and a quantity of bits of a PI field in the first paging indication, a location of a target bit in the PI field includes:

the terminal device determines, based on the quantity of all POs associated with the first paging indication and the quantity of bits of the PI field, a quantity of subgroups included in each of all the POs associated with the first paging indication; the terminal device determines a target subgroup of the terminal device in the target PO based on the quantity of subgroups included in each of all the POs associated with the first paging indication; and the terminal device determines the location of the target bit in the PI field based on the target PO and the target subgroup.

With reference to the second aspect, in some implementations of the second aspect, the method further includes: the terminal device receives first information and second information from a network device, where the first information indicates the quantity of all POs associated with the first paging indication or a quantity of PFs associated with the first paging indication, and the second information indicates the quantity of bits of the PI field in the first paging indication.

With reference to the second aspect, in some implementations of the second aspect, the method further includes: the terminal device determines, based on the quantity of paging frames PFs associated with the first paging indication and a quantity of POs included in each PF, the quantity of all POs associated with the first paging indication.

With reference to the second aspect, in some implementations of the second aspect, the quantity of bits of the PI field is related to the quantity of all POs associated with the first paging indication.

With reference to the second aspect, in some implementations of the second aspect, that the quantity of bits of the PI field is related to the quantity of all POs associated with the first paging indication includes:

when the quantity of all POs associated with the first paging indication is less than or equal to a first value, the quantity of bits of the PI field is a second value; or when the quantity of all POs associated with the first paging indication is greater than a first value, the quantity of bits of the PI field is a third value, and the third value is greater than a second value.

With reference to the second aspect, in some implementations of the second aspect, the quantity of bits of the PI field is less than or equal to a specific threshold.

With reference to the second aspect, in some implementations of the second aspect, the specific threshold is associated with a quantity of bits of downlink control information (DCI) of a paging physical downlink control channel (PDCCH).

According to a third aspect, a communication method is provided, including:

a network device determines, based on a quantity of all POs associated with a first paging indication and a quantity of subgroups included in each of all the POs associated with the first paging indication, a total quantity of subgroups included in all the POs associated with the first paging indication; when the total quantity of subgroups is greater than a specific threshold, the network device determines a bit value of each bit in a PI field based on a first mapping manner, where the first mapping manner is a mapping manner in which at least two subgroups are mapped to a same bit in the PI field; and the network device sends the first paging indication to a terminal device.

According to the solution in this application, if the total quantity of subgroups is greater than the specific threshold, the network device determines the bit value of each bit in the PI field based on the first mapping manner. In other words, the network device generates a paging indication based on the first mapping manner, and a quantity of bits of a PI field of the paging indication is less than or equal to the specific threshold. Therefore, according to the solution in this application, the quantity of bits of the PI field is not excessively large, to ensure that the paging indication is well received.

With reference to the third aspect, in some implementations of the third aspect, the method further includes: when the total quantity of subgroups is less than or equal to the specific threshold, or there is no specific threshold, the network device determines the bit value of each bit in the PI field based on a second mapping manner, where the second mapping manner is a mapping manner in which the subgroups included in all the POs associated with the first paging indication are in a one-to-one correspondence with a plurality of bits of the PI field.

According to the solution in this application, the network device may select an appropriate mapping manner based on the total quantity of subgroups to generate the paging indication, so that the quantity of bits of the PI field in the paging indication is not excessively large, to ensure that the paging indication is well received.

With reference to the third aspect, in some implementations of the third aspect, the method further includes: the network device sends first information and third information to the terminal device, where the first information indicates the quantity of all POs associated with the first paging indication or a quantity of PFs associated with the first paging indication, and the third information indicates the quantity of subgroups included in each of all the POs associated with the first paging indication.

With reference to the third aspect, in some implementations of the third aspect, the specific threshold is associated with a quantity of bits of downlink control information (DCI) of a paging physical downlink control channel (PDCCH).

It should be understood that the specific threshold may be equal to a maximum quantity of bits that are allowed to be included in the PI field.

According to a fourth aspect, a communication method is provided, including:
a terminal device determines, based on a quantity of all POs associated with a first paging indication and a quantity of subgroups included in each of all the POs associated with the first paging indication, a total quantity of subgroups included in all the POs associated with the first paging indication; when the total quantity of subgroups is greater than a specific threshold, the terminal device determines a location of a target bit in a PI field in the first paging indication based on a first mapping manner, where the first mapping manner is a mapping manner in which at least two subgroups are mapped to a same bit in the PI field; the terminal device receives the first paging indication from a network device; and the terminal device determines, based on the first paging indication and the target bit, whether to monitor a paging message.

With reference to the fourth aspect, in some implementations of the fourth aspect, the method further includes:
when the total quantity of subgroups is less than or equal to the specific threshold, or there is no specific threshold, the terminal device determines the location of the target bit in the PI field based on a second mapping manner, where the second mapping manner is a mapping manner in which the subgroups included in all the POs associated with the first paging indication are in a one-to-one correspondence with a plurality of bits of the PI field.

With reference to the fourth aspect, in some implementations of the fourth aspect, the method further includes:
the terminal device determines a target PO to which the terminal device belongs and a target subgroup of the terminal device in the target PO.

With reference to the fourth aspect, in some implementations of the fourth aspect, the method further includes:
the terminal device receives first information and third information from the network device, where the first information indicates the quantity of all POs associated with the first paging indication or a quantity of PFs associated with the first paging indication, and the third information indicates the quantity of subgroups included in each of all the POs associated with the first paging indication.

With reference to the fourth aspect, in some implementations of the fourth aspect, the specific threshold is associated with a quantity of bits of downlink control information (DCI) of a paging physical downlink control channel (PDCCH).

According to a fifth aspect, a communication method is provided, including:
when a synchronization signal block SSB periodicity includes a plurality of paging frames PFs, a network device generates a plurality of paging indications, where the plurality of paging indications correspond to the plurality of PFs; and the network device sends the plurality of paging indications.

According to the solution in this application, if an SSB periodicity includes a plurality of PFs, a plurality of paging indications may be configured for the plurality of PFs, so that a quantity of bits of a PI field in each of the plurality of paging indications is not excessively large, to ensure that the paging indication is well received.

With reference to the fifth aspect, in some implementations of the fifth aspect, the plurality of paging indications are in a one-to-one correspondence with a plurality of radio network temporary identifiers RNTIs; or the plurality of paging indications are in a one-to-one correspondence with a plurality of search space sets; or the plurality of paging indications are in a one-to-one correspondence with a plurality of initial monitoring occasions, the plurality of initial monitoring occasions are located in a same search space set, and monitoring occasions of the plurality of paging indications do not overlap each other.

With reference to the fifth aspect, in some implementations of the fifth aspect, the method further includes:
the network device sends fourth information to a terminal device, where the fourth information includes a plurality of pieces of configuration information, and the plurality of pieces of configuration information are used to configure the plurality of paging indications.

According to a sixth aspect, a communication method is provided, including:
a terminal device determines configuration information of a target paging indication based on a target PF and a correspondence between a plurality of pieces of configuration information and a plurality of PFs; the terminal device receives the target paging indication from a network device based on the configuration information of the target paging indication; and the terminal device determines, based on the target paging indication, whether to monitor the target PF, where the target PF corresponds to the target paging indication.

With reference to the sixth aspect, in some implementations of the sixth aspect, the plurality of pieces of configuration information include information about a plurality of radio network temporary identifiers RNTIs, and the plurality of RNTIs are in a one-to-one correspondence with a plurality of paging indications; or the plurality of pieces of configuration information include information about a plurality of search space sets, and the plurality of search space sets are in a one-to-one correspondence with a plurality of paging indications; or configuration information of a plurality of paging indications includes information about a same search space set and information about a plurality of initial monitoring occasions, the plurality of initial monitoring occasions are in a one-to-one correspondence with the plurality of paging indications, and monitoring occasions of the plurality of paging indications do not overlap each other.

With reference to the sixth aspect, in some implementations of the sixth aspect, the method further includes: the terminal device receives fourth information from the network device, where the fourth information includes the plurality of pieces of configuration information, and the plurality of pieces of configuration information are used to configure the plurality of paging indications.

According to a seventh aspect, a communication apparatus is provided, including:
a transceiver unit, and a processing unit connected to the transceiver unit.

The processing unit is configured to determine, based on a quantity of all POs associated with a first paging indication and a quantity of bits of a PI field in the first paging indication, a quantity of subgroups included in each of all the POs associated with the first paging indication; the processing unit is further configured to determine a bit value of each bit in the PI field based on the quantity of subgroups included in each of all the POs associated with the first paging indication and whether paging exists in a terminal device in each of subgroups included in all the POs associated with the first paging indication; and the transceiver unit is configured to send the first paging indication to a terminal device.

With reference to the seventh aspect, in some implementations of the seventh aspect, the transceiver unit is further configured to send first information and second information to the terminal device, where the first information indicates the quantity of all POs associated with the first paging indication or a quantity of PFs associated with the first paging indication, and the second information indicates the quantity of bits of the PI field in the first paging indication.

With reference to the seventh aspect, in some implementations of the seventh aspect, the processing unit is further configured to determine, based on the quantity of paging frames PFs associated with the first paging indication and a quantity of POs included in each PF, the quantity of all POs associated with the first paging indication.

According to an eighth aspect, a communication apparatus is provided, including:
a transceiver unit, and a processing unit connected to the transceiver unit.

The processing unit is configured to determine, based on a quantity of all paging occasions POs associated with a first paging indication and a quantity of bits of a PI field in the first paging indication, a location of a target bit in the PI field; the transceiver unit is configured to receive the first paging indication from a network device; and the processing unit is further configured to determine, based on the first paging indication and the target bit, whether to monitor a paging message.

With reference to the eighth aspect, in some implementations of the eighth aspect, the processing unit is further configured to determine a target PO to which the terminal device belongs; the processing unit is further configured to determine, based on the quantity of all POs associated with the first paging indication and the quantity of bits of the PI field, a quantity of subgroups included in each of all the POs associated with the first paging indication; the processing unit is further configured to determine a target subgroup of the terminal device in the target PO based on the quantity of subgroups included in each of all the POs associated with the first paging indication; and the processing unit is further configured to determine the location of the target bit in the PI field based on the target PO and the target subgroup.

With reference to the eighth aspect, in some implementations of the eighth aspect, the transceiver unit is further configured to receive first information and second information from a network device, where the first information indicates the quantity of all POs associated with the first paging indication or a quantity of PFs associated with the first paging indication, and the second information indicates the quantity of bits of the PI field in the first paging indication.

With reference to the eighth aspect, in some implementations of the eighth aspect, the processing unit is further configured to determine, based on the quantity of paging frames PFs associated with the first paging indication and a quantity of POs included in each PF, the quantity of all POs associated with the first paging indication.

According to a ninth aspect, a communication apparatus is provided, including:
a transceiver unit, and a processing unit connected to the transceiver unit.

The processing unit is configured to determine, based on a quantity of all POs associated with a first paging indication and a quantity of subgroups included in each of all the POs associated with the first paging indication, a total quantity of subgroups included in all the POs associated with the first paging indication; when the total quantity of subgroups is greater than a specific threshold, the processing unit is further configured to determine a bit value of each bit in a PI field based on a first mapping manner, where the first mapping manner is a mapping manner in which at least two subgroups are mapped to a same bit in the PI field; and the transceiver unit is configured to send the first paging indication to a terminal device.

With reference to the ninth aspect, in some implementations of the ninth aspect, when the total quantity of subgroups is less than or equal to the specific threshold, or there is no specific threshold, the processing unit is further configured to determine the bit value of each bit in the PI field based on a second mapping manner, where the second mapping manner is a mapping manner in which the subgroups included in all the POs associated with the first paging indication are in a one-to-one correspondence with a plurality of bits of the PI field.

With reference to the ninth aspect, in some implementations of the ninth aspect, the transceiver unit is further configured to send first information and third information to the terminal device, where the first information indicates the quantity of all POs associated with the first paging indication or a quantity of PFs associated with the first paging indication, and the third information indicates the quantity of subgroups included in each of all the POs associated with the first paging indication.

According to a tenth aspect, a communication apparatus is provided, including:

a transceiver unit, and a processing unit connected to the transceiver unit.

The processing unit is configured to determine, based on a quantity of all POs associated with a first paging indication and a quantity of subgroups included in each of all the POs associated with the first paging indication, a total quantity of subgroups included in all the POs associated with the first paging indication; when the total quantity of subgroups is greater than a specific threshold, the processing unit is further configured to determine a location of a target bit in a PI field in the first paging indication based on a first mapping manner, where the first mapping manner is a mapping manner in which at least two subgroups are mapped to a same bit in the PI field; the transceiver unit is configured to receive the first paging indication from a network device; and the processing unit is further configured to determine, based on the first paging indication and the target bit, whether to monitor a paging message.

With reference to the tenth aspect, in some implementations of the tenth aspect, when the total quantity of subgroups is less than or equal to the specific threshold, or there is no specific threshold, the processing unit is configured to determine the location of the target bit in the PI field based on a second mapping manner, where the second mapping manner is a mapping manner in which the subgroups included in all the POs associated with the first paging indication are in a one-to-one correspondence with a plurality of bits of the PI field.

With reference to the tenth aspect, in some implementations of the tenth aspect, the processing unit is configured to determine a target PO to which the terminal device belongs and a target subgroup of the terminal device in the target PO.

With reference to the tenth aspect, in some implementations of the tenth aspect, the transceiver unit is further configured to receive first information and third information from the network device, where the first information indicates the quantity of all POs associated with the first paging indication or a quantity of PFs associated with the first paging indication, and the third information indicates the quantity of subgroups included in each of all the POs associated with the first paging indication.

According to an eleventh aspect, a communication apparatus is provided, including:

a transceiver unit, and a processing unit connected to the transceiver unit.

When a synchronization signal block SSB periodicity includes a plurality of paging frames PFs, the processing unit is configured to generate a plurality of paging indications, where the plurality of paging indications correspond to the plurality of PFs; and the transceiver unit is configured to send the plurality of paging indications.

With reference to the eleventh aspect, in some implementations of the eleventh aspect, the transceiver unit is further configured to send fourth information to a terminal device, where the fourth information includes a plurality of pieces of configuration information, and the plurality of pieces of configuration information are used to configure the plurality of paging indications.

According to a twelfth aspect, a communication apparatus is provided, including:

a transceiver unit, and a processing unit connected to the transceiver unit.

The processing unit is configured to determine configuration information of a target paging indication based on a target PF and a correspondence between a plurality of pieces of configuration information and a plurality of PFs; the transceiver unit is configured to receive the target paging indication from a network device based on the configuration information of the target paging indication; and the processing unit is further configured to determine, based on the target paging indication, whether to monitor the target PF, where the target PF corresponds to the target paging indication.

With reference to the twelfth aspect, in some implementations of the twelfth aspect, the transceiver unit is further configured to receive fourth information from the network device, where the fourth information includes the plurality of pieces of configuration information, and the plurality of pieces of configuration information are used to configure the plurality of paging indications.

According to a thirteenth aspect, a communication method is provided, including:

a terminal device sends fifth information, where
the fifth information indicates a quantity of SS burst sets that need to be received by the terminal device before the terminal device receives a paging PDCCH, or the fifth information indicates duration in which the terminal device needs to be woken up in advance to receive a paging PDCCH;
the terminal device determines, based on the quantity of SS burst sets, an occasion on which an access network device sends a paging indication, where the paging indication includes information about whether paging of the terminal device exists; and
the terminal device monitors the paging indication based on the occasion.

According to a fourteenth aspect, a communication method is provided, including:

a network device receives eighth information, where

the eighth information indicates a quantity of SS burst sets that need to be received by a terminal device before the terminal device receives a paging PDCCH, or the eighth information indicates duration in which a terminal device needs to be woken up in advance to receive a paging PDCCH;

the network device determines, based on the eighth information, an occasion for sending a paging indication, where the paging indication includes information about whether paging of the terminal device exists; and

the network device sends the paging indication on the occasion.

According to a fifteenth aspect, a communication method is provided, including:

a terminal device sends fifth information, where

the fifth information indicates a quantity of SS burst sets that need to be received by the terminal device before the terminal device receives a paging PDCCH, or the fifth information indicates duration in which the terminal device needs to be woken up in advance to receive a paging PDCCH;

the terminal device receives seventh information, where the seventh information indicates that an occasion on which an access network device sends a paging indication is after a last $N^{th}$ SS burst set that is before a target paging occasion, and N is a positive integer;

the terminal device determines, based on the seventh information, the occasion on which the access network device sends the paging indication; and

the terminal device monitors the paging indication based on the occasion for sending the paging indication, where the paging indication includes information about whether paging of the terminal device exists.

According to a sixteenth aspect, a communication method is provided, including:

a network device receives a plurality of pieces of ninth information, where the plurality of pieces of ninth information is in a one-to-one correspondence with a plurality of terminal devices, and each of the plurality of pieces of ninth information indicates a quantity of SS burst sets that need to be received by a corresponding terminal device before the corresponding terminal device receives a paging PDCCH, or each of the plurality of pieces of ninth information indicates duration in which a corresponding terminal device needs to be woken up in advance to receive a paging PDCCH;

the network device determines, based on the plurality of pieces of ninth information, that an occasion for sending a paging indication is after a last $N^{th}$ SS burst set that is before a target paging occasion, where N is a positive integer;

the network device sends seventh information, where the seventh information indicates that the occasion for sending the paging indication is after the $N^{th}$ SS burst set; and

the network device sends the paging indication on the occasion for sending the paging indication.

According to a seventeenth aspect, a communication method is provided, including:

a terminal receives a paging early indication PEI, where the PEI is associated with at least one paging occasion PO; the terminal determines a target PO corresponding to the terminal, where the at least one PO includes the target PO, the target PO corresponds to a plurality of bits in the PEI, and the plurality of bits correspond to a plurality of subgroups; and when an identifier of a subgroup in which the terminal is located is not obtained, if a first bit indicates that paging exists, the terminal monitors a paging message, where the first bit is any one of the plurality of bits; or when an identifier of a subgroup in which the terminal is located is not obtained, if all bits in the plurality of bits indicate that no paging exists, the terminal does not monitor the paging message.

With reference to the seventeenth aspect, in some implementations of the seventeenth aspect, the method further includes: The terminal obtains a quantity of subgroups into which each PO is divided.

According to an eighteenth aspect, a communication method is provided, including:

an access network device determines that a terminal is paged, where the terminal corresponds to a target monitoring occasion PO; and the access network device sends a paging early indication PEI, where the PEI is associated with the target PO, the target PO corresponds to a plurality of bits in the PEI, the plurality of bits correspond to a plurality of subgroups, and when an identifier of a subgroup in which the terminal is located is not obtained, at least one of the plurality of bits indicates that paging exists.

According to a nineteenth aspect, a communication apparatus is provided, including units configured to perform the method in any possible implementation in the thirteenth aspect to the eighteenth aspect.

According to a twentieth aspect, a communication device is provided, including a communication interface and a processor. When the communication device runs, the processor executes a computer program or instruction stored in the memory, so that the communication device performs the method in any possible implementation of the first aspect to the sixth aspect or any possible implementation of the thirteenth aspect to the eighteenth aspect. The memory may be located in the processor, or may be implemented by using a chip independent of the processor. This is not specifically limited in this application.

According to a twenty-first aspect, a computer-readable storage medium is provided, including a computer program. When the computer program is run on a computer, the computer is enabled to perform the method in any possible implementation of the first aspect to the sixth aspect or any possible implementation of the thirteenth aspect to the eighteenth aspect.

According to a twenty-second aspect, a chip is provided. A processing circuit is disposed on the chip, and the processing circuit is configured to perform the method in any possible implementation of the first aspect to the sixth aspect or any possible implementation of the thirteenth aspect to the eighteenth aspect.

According to a twenty-third aspect, a computer program product is provided. The computer program product includes a computer program (which may also be referred to as code or instructions), and when the computer program is run, a computer is enabled to perform the method in any possible implementation of the first aspect to the sixth aspect or any possible implementation of the thirteenth aspect to the eighteenth aspect.

**BRIEF DESCRIPTION OF DRAWINGS**

FIG. 1 shows a system architecture to which an embodiment of this application is applicable;
FIG. 2 is an interaction diagram of a method according to this application;
FIG. 3 is an interaction diagram of a method according to this application;
FIG. 4 is an interaction diagram of a method according to this application;
FIG. 5 is an interaction diagram of a method according to this application;
FIG. 6 shows different occasions for sending a PEI #1;
FIG. 7 is an interaction diagram of a method according to this application;
FIG. 8 is an interaction diagram of a method according to this application;
FIG. 9 is an interaction diagram of a method according to this application;
FIG. 10 is a block diagram of a communication apparatus according to this application; and
FIG. 11 is a block diagram of a communication device according to this application.

**DESCRIPTION OF EMBODIMENTS**

The following describes technical solutions of embodiments in this application with reference to accompanying drawings.

The technical solutions of embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, and a fifth generation (5th Generation, 5G) communication system or new radio (New Radio, NR), or a future sixth generation (6th Generation, 6G) system.

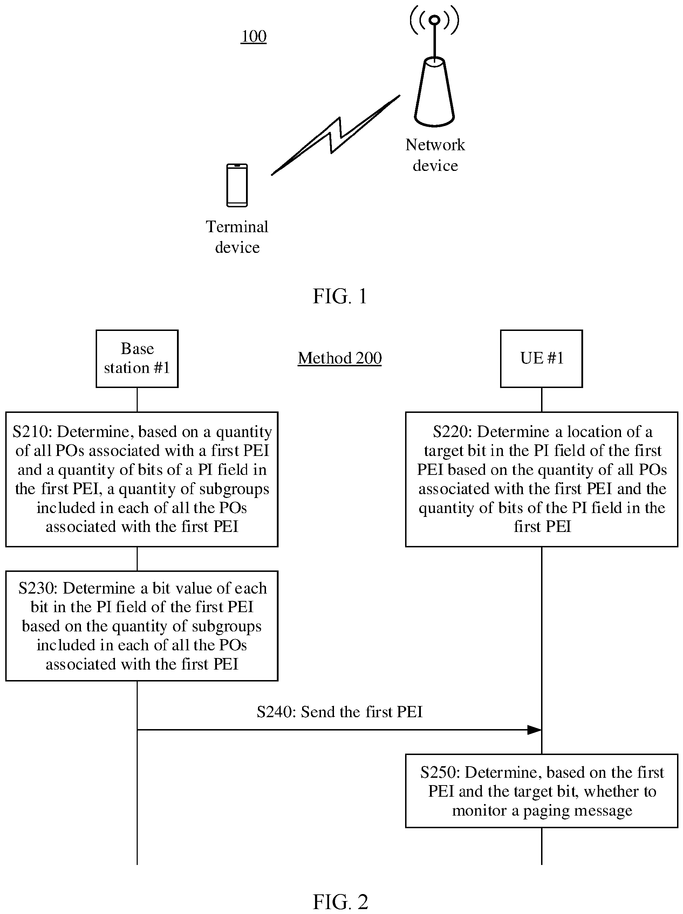

FIG. 1 shows a communication system 100 to which an embodiment of this application is applicable. The communication system 100 includes a terminal device and a network device.

The terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, a vehicle-mounted device, a wearable device, a terminal device in a 5G network, a terminal device in a future 6G network, or a terminal device in a future evolved public land mobile network (Public Land Mobile Network, PLMN). This is not limited in embodiments of this application.

The network device in embodiments of this application may be a device configured to communicate with the terminal device. The network device may be a base transceiver station (Base Transceiver Station, BTS) in a global system for mobile communications (Global System for Mobile communications, GSM) system or a code division multiple access (Code Division Multiple Access, CDMA) system, a NodeB (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay node, an access point, a vehicle-mounted device, a wearable device, a network device in a 5G network, a network device in a future 6G network, a network device in a future evolved PLMN, or the like. This is not limited in embodiments of this application.

To resolve a power consumption problem of receiving paging by a terminal in an idle state and an inactive state, 3GPP introduces new paging indication information, which may also be referred to as a paging early indication (paging early indication, PEI) or an advanced paging indication (advanced paging indication). The paging indication information usually may include the following three indication fields:

1. A paging indication field (paging indication field), which is referred to as a PI field for short, indicates whether a terminal corresponding to a PO in a PF or a terminal in a terminal subgroup corresponding to a PO needs to monitor a paging message.

2. A tracking reference signal (tracking reference signal, TRS) field indicates whether there is an available TRS resource in an idle/inactive state, where the TRS resource may be used to assist a terminal in an idle/inactive state in time-frequency offset estimation.

3. A short message field (short message field) indicates whether a system message is changed, or is used to provide information such as a warning for an emergency like an earthquake or a tsunami.

The following uses an example to describe disadvantages of the conventional technology.

It is assumed that one PEI is associated with two PFs, each PF includes four POs, and terminals on each PO are divided into eight subgroups. If a mapping manner in which bits in a PI field are in a one-to-one correspondence with terminal subgroups is used, the PI field needs 64 bits. In comparison, a size of downlink control information (downlink control information, DCI) of a paging physical downlink control channel (physical downlink control channel, PDCCH) is generally 41 bits. In this case, a quantity of bits of only the PI field in the PEI already exceeds a quantity of bits of the DCI of the paging PDCCH. If a quantity of bits occupied by a TRS field and a short message field is further considered, a quantity of bits of the PEI is greater. When the quantity of bits of the PEI is excessively large, receiving performance of the PEI is reduced, and a usage range of the PEI is also affected.

In view of this, this application provides a plurality of methods to resolve the foregoing problem. The following describes in detail the solutions provided in this application. For ease of description, an example in which a network device is a base station, a terminal device is UE, and a paging indication is a PEI is used below for description.

FIG. 2 shows a communication method 200 according to this application. The method 200 includes the following steps.

S210: A base station #1 determines, based on a quantity (denoted as W) of all POs associated with a first PEI and a quantity (denoted as L) of bits of a PI field in the first PEI, a quantity (denoted as K) of subgroups included in each of all the POs associated with the first PEI.

It should be understood that when a value of N is 1, it indicates that UEs in one PO are not divided into groups.

In a possible manner, N may be determined according to the following formula:

$$K = \left\lfloor \frac{L}{W} \right\rfloor,$$

where $\left\lfloor \dfrac{L}{W} \right\rfloor$ means that L/W is rounded down.

In another possible manner, N may be determined according to the following formula:

$$K = \min\left( \left\lfloor \frac{L}{W} \right\rfloor, K_{\max} \right),$$

where $K_{max}$ represents a maximum value of K, for example,

$$K_{\max} = 8.$$

For example, if the quantity of bits of the PI field in the first PEI is 16, and the quantity of POs associated with the first PEI is 8, N is 2. In other words, in the eight POs associated with the first PEI, UEs corresponding to each PO are divided into two subgroups.

For another example, if the quantity of bits of the PI field in the first PEI is 16, and the quantity of POs associated with the first PEI is 2, N is 8. In other words, in the eight POs associated with the first PEI, UEs corresponding to each PO are divided into eight subgroups.

For the quantity of all POs associated with the first PEI, optionally, in a manner, the quantity of all POs associated with the first PEI may be directly preconfigured in the base station #1.

Optionally, in another manner, a quantity of PFs associated with the first PEI and a quantity of POs included in each PF may be preconfigured in the base station #1. In this case, the base station #1 may determine, based on the quantity of PFs associated with the first PEI and the quantity of POs included in each PF, the quantity of all POs associated with the first PEI.

Generally, the quantity of all POs associated with the first PEI is equal to the quantity of PFs associated with the first PEI multiplied by the quantity of POs included in each PF. For example, the first PEI is associated with two PFs, and each PF includes four POs. In this case, the base station #1 determines that the first PEI is associated with eight POs.

For the quantity of bits of the PI field in the first PEI, optionally, in a manner, the quantity of bits of the PI field in the first PEI may be preconfigured in the base station #1.

Optionally, in another manner, the quantity of bits of the PI field is related to the quantity of all POs associated with the first PEI. Specifically, when the quantity of all POs associated with the first PEI is less than or equal to a first value, the quantity of bits of the PI field is a second value; or when the quantity of all POs associated with the first PEI is greater than a first value, the quantity of bits of the PI field is a third value, and the third value is greater than a second value.

For example, if the quantity of POs associated with the first PEI is less than or equal to 4 (or the first PEI is associated with only one PF), the base station #1 determines that the quantity of bits of the PI field in the first PEI may be 8 or 16.

For another example, if the quantity of POs associated with the first PEI is greater than 4, for example, eight POs (or the first PEI is associated with a plurality of PFs, for example, two PFs), the base station #1 determines that the quantity of bits of the PI field in the first PEI is 32.

It should be understood that there may be a plurality of levels for the quantity of bits of the PI field in the first PEI, and the plurality of levels correspond to a plurality of values. When the first PEI is associated with a larger quantity of POs, the base station #1 may select a value with a higher level as the quantity of bits of the PI field in the first PEI.

In addition, the quantity of bits of the PI field in the first PEI may be less than or equal to a specific threshold. Optionally, the specific threshold is associated with a quantity of bits of DCI of a paging PDCCH. A value of the specific threshold may be agreed on in advance, or may be preconfigured in the base station #1.

For example, the DCI of the paging PDCCH is generally 41 bits. In this case, the specific threshold may be 32.

For the specific threshold, details are not described below.

S220: UE #1 determines a location of a target bit in the PI field of the first PEI based on the quantity of all POs associated with the first PEI and the quantity of bits of the PI field in the first PEI.

It should be understood that the target bit indicates whether the UE #1 monitors a paging message.

In a possible manner, the UE #1 may determine a target PO to which the UE #1 belongs. For example, the UE #1 may determine an index of the target PO based on an identifier of the UE #1 (an ID of the UE #1).

Further, the UE #1 may determine, based on the quantity of all POs associated with the first PEI and the quantity of bits of the PI field in the first PEI, the quantity of subgroups included in each of all the POs associated with the first PEI.

Further, the UE #1 determines a target subgroup of the UE #1 in the target PO based on the quantity of subgroups included in each of all the POs associated with the first PEI. For example, the UE #1 may determine an index of the target subgroup based on the quantity of subgroups included in each of all the POs associated with the first PEI and with reference to the ID of the UE #1.

Example 1: If each of all the POs associated with the first PEI includes two subgroups, the UE #1 determines that the UE #1 belongs to a subgroup #1 in the target PO.

Example 2: If each of all the POs associated with the first PEI includes eight subgroups, the UE #1 determines that the UE #1 belongs to a subgroup #2 in the target PO.

It can be learned from the foregoing two examples that the target subgroup to which the UE #1 belongs may vary with the quantity of subgroups included in each PO.

In a possible manner, the index of the target subgroup may be determined according to the following formula, where it is assumed that the first PEI is associated with N PFs, each PF includes M POs (or the first PEI is associated with W POs, where $W = N \times M$), and each PO includes K subgroups:

$$index = (n-1) \times M \times K + (m-1) \times K + k$$

The target subgroup belongs to an $n^{th}$ PF in the N PFs, an $m^{th}$ PO of the $n^{th}$ PF, and a $k^{th}$ subgroup of the $m^{th}$ PO, and $k = (UE\_ID \bmod K) + 1$. Herein, n, m, and $k$ are all counted from 1.

The UE may determine that the target PO subgroup corresponds to an $index^{th}$ bit ($k$ is counted from 1) in the PI field.

If the PF index n of the target subgroup, the PO index m of the target subgroup, and the PO subgroup index $k$ of the target subgroup in each PO are all counted from 0, similarly, the index of the target subgroup may be obtained as follows:

$$index = n \times M \times K + m \times K + k$$

Whether paging exists in the target group is indicated by the $index^{th}$ bit in the PI field in the PEI.

Further, the UE #1 determines the location of the target bit in the PI field of the first PEI based on the target PO and the target subgroup to which the UE #1 belongs.

S230: The base station #1 determines a bit value of each bit in the PI field of the first PEI based on the quantity of subgroups included in each of all the POs associated with the first PEI.

The quantity of bits included in the PI field in the first PEI is the same as a total quantity of subgroups included in all the POs associated with the first PEI. To be specific, a plurality of bits included in the PI field in the first PEI are in a one-to-one correspondence with the subgroups included in all the POs associated with the first PEI (denoted as a second mapping manner, where the "mapping" means that if a subgroup is mapped to a bit in the PI field, the bit indicates whether paging exists in the subgroup).

The bit value may be "0" or "1". When a bit value of a bit is "0", it indicates that no paging message exists in a subgroup corresponding to the bit; or when a bit value of a bit is "1", it indicates that a paging message exists in a subgroup corresponding to the bit.

The following describes the second mapping manner.

Manner 1:

Mapping is performed in a sequence of first PF, then a PO, and finally a subgroup in a PO.

For example, all subgroups in all POs of a first PF may be first mapped, and then all subgroups in all POs of a second PF are mapped. By analogy, all PFs corresponding to the PEI are mapped to the PI field, and the mapping is PF ascending mapping. Alternatively, PF descending mapping may be performed. All subgroups in all POs of a last PF are first mapped, and then all subgroups in all POs of a second-to-last PF are mapped. By analogy, all PFs corresponding to the PEI are mapped to the PI field.

For POs included in each PF, all PO subgroups in a first PO may be first mapped, and then all PO subgroups in a second PO are mapped. By analogy, all POs corresponding to each PF are mapped to the PI field. The mapping is PO ascending mapping. Alternatively, PO descending mapping may be performed. This method is similar to the PF descending mapping, and details are not described again. For example, the first PEI is associated with two PFs (denoted as a PF #1 and a PF #2), each PF includes two POs (denoted as a PO #1, a PO #2, a PO #3, and a PO #4), and each PO includes two subgroups (denoted as a subgroup #1 to a subgroup #8).

In this case, the subgroup #1 and the subgroup #2 of the PO #1 of the PF #1 may be first mapped, then the subgroup #3 and the subgroup #4 of the PO #2 of the PF #1 are mapped, then the subgroup #5 and the subgroup #6 of the PO #3 of the PF #2 are mapped, and then the subgroup #7 and the subgroup #8 of the PO #4 of the PF #2 are mapped.

Manner 2:

For one PF, a first subgroup in all POs of the PF may be first mapped, then a second subgroup in all the POs of the PF is mapped, and the rest may be deduced by analogy; or a last subgroup in all the POs of the PF is first mapped, then a second-to-last subgroup in all the POs of the PF is mapped, and the rest may be deduced by analogy.

For all POs included in one PF, a first PO in all the POs may be first mapped, then a second PO in all the POs is mapped, and the rest may be deduced by analogy; or a last PO in all the POs is first mapped, then a second-to-last PO in all the POs is mapped, and the rest may be deduced by analogy.

For a plurality of PFs, a first PF in the plurality of PFs may be first mapped, then a second PF in the plurality of PFs is mapped, and the rest may be deduced by analogy; or a last PF in the plurality of PFs is first mapped, then a second-to-last PF in the plurality of PFs is mapped, and the rest may be deduced by analogy.

Certainly, the second mapping manner may further include another similar mapping manner (for example, mapping sequences of PFs, POs, and PO subgroups are different, or an ascending mapping manner and a descending mapping manner are mixed). This is not limited in this application.

In addition, in a case, the base station may notify, by using signaling or a message, the UE of a manner of mapping different subgroups to the PI field. In another case, the base station and the UE may predefine, by using a protocol, a manner of mapping different subgroups to the PI field. In other words, the UE may also learn the manner in which the base station maps different subgroups to the PI field. In S220, the UE may determine the location of the target bit in the PI field based on the responded mapping manner.

It should be understood that the base station #1 may further determine bit values of the TRS field and the short message field, to finally generate the first PEI.

S240: The base station #1 sends the first PEI. Correspondingly, the UE #1 receives the first PEI.

In a possible manner, the base station #1 may send the first PEI in a broadcast/multicast manner.

S250: The UE #1 determines, based on the first PEI and the target bit, whether to monitor the paging message.

For example, the target PO of the UE #1 is the PO #1, and the target subgroup is a subgroup #11 corresponding to the PO #1. The base station maps different subgroups to the PI field in Manner 1 in S230, and the target bit is a bit #1. The UE #1 determines, based on the bit #1, whether to monitor the paging message. If the bit #1 is set to "1", the UE #1 monitors the paging message. If the bit #1 is set to "0", the UE #1 does not monitor the paging message.

According to the solution in this application, the base station #1 determines, based on a quantity of bits of a PI field and a quantity of POs associated with a PEI, a quantity of subgroups included in each PO. In comparison, if the base station #1 determines a quantity of bits of a PI field based on a quantity of PFs associated with a PEI, a quantity of POs included in each PF, and a quantity of subgroups included in each PO, the quantity of bits of the PI field may be excessively large. Therefore, according to the solution in this application, the quantity of bits of the PI field is not excessively large, to ensure that the PEI is well received.

Optionally, before S220, the method 200 further includes S260.

S260: The base station #1 sends first information and second information to the UE #1. Correspondingly, the UE #1 receives the first information and the second information.

The first information indicates the quantity of all POs associated with the first PEI or a quantity of PFs associated with the first PEI, and the second information indicates the quantity of bits of the PI field in the first PEI.

In a possible manner, the base station #1 may send the first information and the second information to the UE #1 in a broadcast/multicast manner.

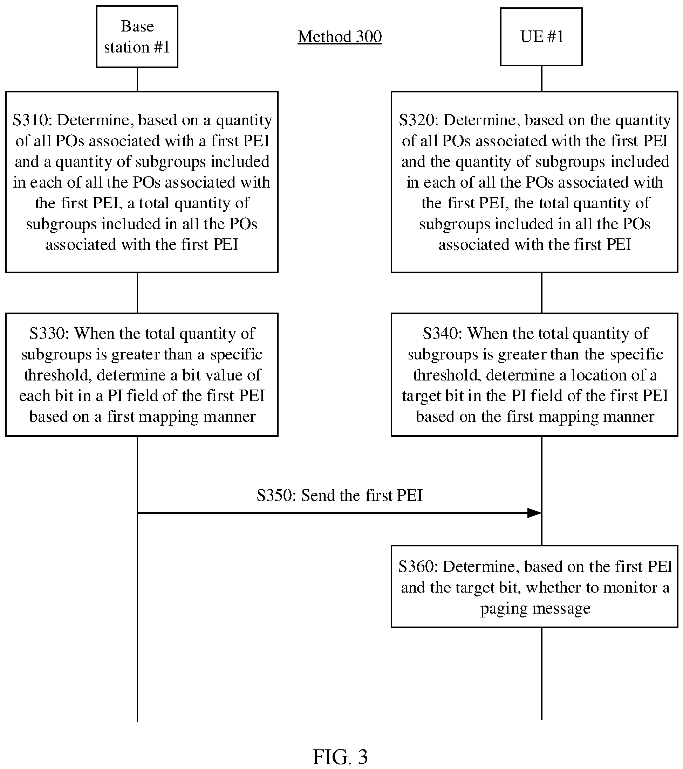

FIG. 3 shows a communication method 300 according to this application. The method 300 includes the following steps.

S310: A base station #1 determines, based on a quantity of all POs associated with a first PEI and a quantity of subgroups included in each of all the POs associated with the first PEI, a total quantity (denoted as Q) of subgroups included in all the POs associated with the first PEI.

For example, if the first PEI is associated with two PFs, each PF includes four POs, and each PO includes eight subgroups, the total quantity of subgroups included in all the POs associated with the first PEI is $Q = 2 \times 4 \times 8 = 64$.

S320: UE #1 determines, based on the quantity of all POs associated with the first PEI and the quantity of subgroups included in each of all the POs associated with the first PEI, the total quantity of subgroups included in all the POs associated with the first PEI.

For a specific method, refer to the descriptions in S310.

S330: When the total quantity of subgroups is greater than a specific threshold, the base station #1 determines a bit value of each bit in a PI field of the first PEI based on a first mapping manner, where the first mapping manner is a mapping manner in which at least two subgroups are mapped to a same bit in the PI field.

It should be understood that the specific threshold may be agreed on in advance, or may be preconfigured in the base station #1.

The following describes the first mapping manner by using a plurality of examples.

Example 1:

For a same PO, at least two subgroups in a plurality of subgroups corresponding to the same PO are mapped to a same bit in the PI field of the first PEI.

For example, for eight POs associated with the first PEI, UEs corresponding to each PO are divided into eight subgroups, and a specific threshold is 32. In other words, the total quantity of subgroups is 64, which is greater than the specific threshold. In this case, the PI field of the first PEI may include 16 bits (denoted as a bit #1 to a bit #16). For a PO #1 in the eight POs, a subgroup #11 to a subgroup #14 of the PO #1 are mapped to a bit #1 in the PI field, and a subgroup #15 to a subgroup #18 are mapped to a bit #2 in the PI field. For a PO #2, a subgroup #21 to a subgroup #24 of the PO #2 are mapped to a bit #3, and a subgroup #25 to a subgroup #28 are mapped to a bit #4. The rest may be deduced by analogy, and details are not described herein again.

It can be learned from the foregoing that if the 64 subgroups are in a one-to-one correspondence with a plurality of bits in the PI field of the first PEI, the PI field needs 64 bits. Based on the solution in this application, only 16 bits are required. Therefore, the quantity of bits of the PI field can be reduced.

Example 2:

For different PFs, at least two subgroups in POs of the different PFs are mapped to a same bit in the PI field of the first PEI.

For example, the first PEI is associated with two PFs (denoted as a PF #1 and a PF #2), each PF includes four POs (denoted as a PO #11 to a PO #14 and a PO #21 to a PO #24 respectively), a quantity N of subgroups into which UE corresponding to each PO is divided is 8 (denoted as a subgroup #111 to a subgroup #118, a subgroup #121 to a subgroup #128, a subgroup #131 to a subgroup #138, a subgroup #141 to a subgroup #148, a subgroup #211 to a subgroup #218, a subgroup #221 to a subgroup #228, a subgroup #231 to a subgroup #238, and a subgroup #241 to a subgroup #248 respectively), and the specific threshold is 32. In other words, the total quantity of subgroups is 64, which is greater than the specific threshold. In this case, the subgroup #111 and the subgroup #112 corresponding to the PO #11 and the subgroup #211 and the subgroup #212 corresponding to the PO #21 may be mapped to the bit #1 of the PI field; and the subgroup #113 and the subgroup #114 corresponding to the PO #11 and the subgroup #213 and the subgroup #214 corresponding to the PO #21 may be mapped to the bit #2. The rest may be deduced by analogy. In other words, the PI field needs only 16 bits.

Example 3:

For different PFs, PO subgroups that have a same subgroup index in POs of the different PFs are mapped to a same bit in the PI field of the first PEI.

For example, the first PEI is associated with four PFs (denoted as a PF #1, a PF #2, a PF #3, and a PF #4), each PF includes four POs (denoted as a PO #11 to a PO #14, a PO #21 to a PO #24, a PO #31 to a PO #34, and a PO #41 to a PO #44 respectively), UE corresponding to each PO is divided into four subgroups (denoted as a subgroup #111 to a subgroup #114, a subgroup #121 to a subgroup #124, a subgroup #131 to a subgroup #134, a subgroup #141 to a subgroup #144, a subgroup #211 to a subgroup #214, a subgroup #221 to a subgroup #224, a subgroup #231 to a subgroup #234, a subgroup #241 to a subgroup #244, a subgroup #311 to a subgroup #314, a subgroup #321 to a subgroup #324, a subgroup #331 to a subgroup #334, a subgroup #341 to a subgroup #344, a subgroup #411 to a subgroup #414, a subgroup #421 to a subgroup #424, a subgroup #431 to a subgroup #434, a subgroup #441 to a subgroup #444 respectively), and the specific threshold is 32. In other words, the total quantity of subgroups is 64, which is greater than the specific threshold. In this case, PO subgroups whose PO indexes and PO subgroup indexes are the same in the PF #1 and the PF #3 may be mapped to a same bit, and PO subgroups whose PO indexes and PO subgroup indexes are the same in the PF #2 and the PF #4 may be mapped to a same bit. For example, the subgroup #111 of the PO #11 in the PF #1 and the subgroup #311 of the PO #31 in the PF #3 are mapped to a bit #1 of the PI field. The subgroup #112 of the PO #11 in the PF #1 and the subgroup #312 of the PO #31 in the PF #3 are mapped to a bit #2 of the PI field. The rest may be deduced by analogy. In other words, the PI field needs only 32 bits.

Example 4:

Mapping is performed in a cyclic remainder mapping manner.

It is assumed that one PEI is associated with APFs, each PF includes B POs, and UEs corresponding to each PO are divided into C subgroups.

For a subgroup, if an index of a PF corresponding to the subgroup, an index of a PO in the PF, and an index of the subgroup are respectively a, b, and c, the index (index) of a bit corresponding to the subgroup may be calculated according to the following formula:

$$index = (a-1) \times B \times C + (b-1) \times C + c$$

For example, one PEI is associated with two PFs, each PF includes four POs, and UEs corresponding to each PO are divided into eight subgroups. In other words, A=2, B=4, and C=8.

For a first subgroup in a first PO included in a first PF, an index of a bit corresponding to the subgroup is *index* = (1-1) × 4 × 8 + (1-1) × 8 + 1 = 1. If a maximum quantity of bits in the PI field may be $L_{max}$ (for example, $L_{max}$ is 20), because [(*index*-1)mod$L_{max}$] + 1 = 1, the subgroup is mapped to a first bit in the PI field.

It should be understood that, in this application, a meaning of *x* mod *y* is a remainder of dividing x by y.

For a fourth subgroup in a third PO included in the first PF, an index of a bit corresponding to the subgroup is *index* = (1-1)×4×8+(3-1)×8+4 = 20 . If a maximum quantity of bits in the PI field may be $L_{max}$ (for example, $L_{max}$ is 20), because [(*index*-1)mod$L_{max}$] + 1 = 20, the subgroup is mapped to a twentieth bit in the PI field.

For a fourth subgroup in a third PO included in a second PF, an index of a bit corresponding to the subgroup is *index* = (2-1)×4×8+(3-1)×8+ 4 = 52. If a maximum quantity of bits in the PI field may be $L_{max}$ (for example, $L_{max}$ is 20), because [(*index* -1) mod $L_{max}$]+1 = 12, the subgroup is mapped to a twelfth bit in the PI field.

It should be noted that, in the cyclic remainder mapping, the index of the PF, the index of the PO in the PF, and the indexes a, b, and c of the subgroups are all counted from 1.

If a, b, and c are all counted from 0, similarly, an index (index) of a bit corresponding to a subgroup may be obtained as *index* = $a×B×C+b×C+c$, and whether paging exists in the subgroup whose number is index is indicated by an *index* mod $L_{max}$th bit in the PI field.

It should be understood that the base station #1 may further determine bit values of the TRS field and the short message field, to finally generate the first PEI.

S340: When the total quantity of subgroups is greater than the specific threshold, the UE #1 determines a location of a target bit in the PI field of the first PEI based on the first mapping manner.

It should be understood that the specific threshold may be agreed on in advance, or may be preconfigured in the UE #1, or may be obtained by the UE #1 from the base station #1. This is not limited. The specific threshold may be the quantity of bits of the PI field in the first PEI, or may be greater than the quantity of bits of the PI field in the first PEI.

Specifically, the UE #1 may determine a target PO to which the UE #1 belongs and a target subgroup of the UE #1 in the target PO.

Further, the UE #1 determines the location of the target bit in the PI field of the first PEI based on the target PO to which the UE #1 belongs, the target subgroup, and the first mapping manner.

For example, the first mapping manner is the example 1 in S330. If the target PO to which the UE #1 belongs is the PO #1, and the target subgroup is the subgroup #11 corresponding to the PO #1, the target bit is the bit #1. In other words, the location of the target bit is the first bit in the PI field.

S350: The base station #1 sends the first PEI. Correspondingly, the UE #1 receives the first PEI.

S360: The UE #1 determines, based on the first PEI and the target bit, whether to monitor the paging message.

For example, the UE #1 determines that the target bit is the bit #1, and the UE #1 parses the bit #1 in the PI field of the first PEI. If the bit #1 is set to "1", the UE #1 monitors the paging message. If the bit #1 is set to "0", the UE #1 does not monitor the paging message.

According to the solution in this application, if the total quantity of subgroups is greater than the specific threshold, the base station #1 determines the bit value of each bit in the PI field based on the first mapping manner. In other words, the base station #1 generates a PEI based on the first mapping manner, and a quantity of bits of a PI field of the PEI is less than or equal to the specific threshold. Therefore, according to the solution in this application, the quantity of bits of the PI field is not excessively large, to ensure that the PEI is well received.

Optionally, in another possible case, the method 300 does not include S330 and S340, and before S350, the method 300 further includes S370 and S380.

S370: When the total quantity of subgroups is less than or equal to the specific threshold, or there is no specific threshold, the base station #1 determines the bit value of each bit in the PI field of the first PEI based on a second mapping manner.

The second mapping manner is a mapping manner in which the subgroups included in all the POs associated with the first PEI are in a one-to-one correspondence with a plurality of bits in the PI field.

Specifically, for the second mapping manner, refer to the descriptions in S230. Details are not described herein.

S380: When the total quantity of subgroups in the plurality of subgroups is less than or equal to the specific threshold, or there is no specific threshold, the UE #1 determines the location of the target bit in the PI field of the first PEI based on the second mapping manner.

According to the solution in this application, the base station #1 may select an appropriate mapping manner based on the total quantity of subgroups to generate the PEI, so that the quantity of bits of the PI field in the PEI is not excessively large, to ensure that the PEI is well received.

Optionally, before S320, the method 300 further includes S390.

S390: The base station #1 sends first information and third information. Correspondingly, the UE #1 receives the first information and the third information.

The first information indicates the quantity of all POs associated with the first PEI or a quantity of PFs associated with the first PEI, and the third information indicates the quantity of subgroups included in each of all the POs associated with the first PEI.

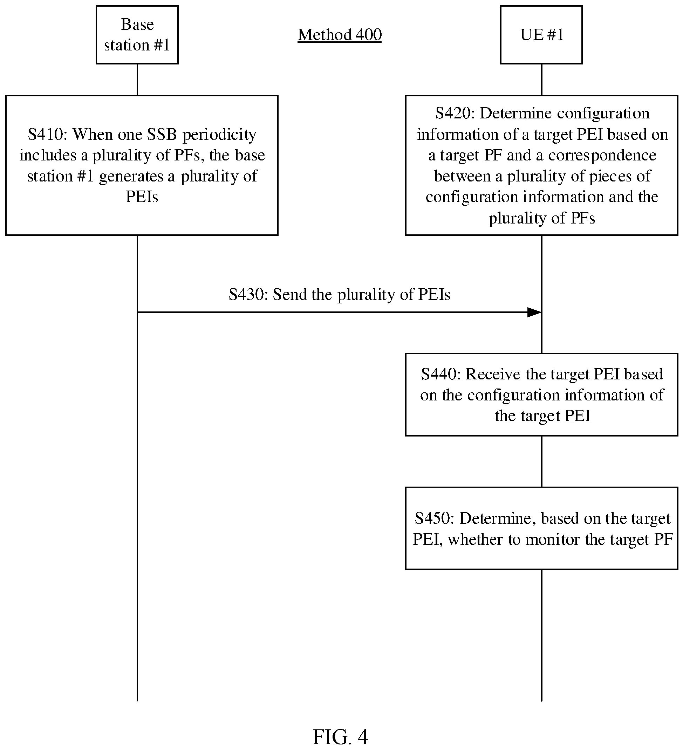

FIG. 4 shows a communication method 400 according to this application. The method 400 includes the following steps.

S410: When an SSB periodicity includes a plurality of PFs, a base station #1 generates a plurality of PEIs, where the plurality of PEIs correspond to the plurality of PFs.

Optionally, in a manner, the plurality of PEIs may be in a one-to-one correspondence with the plurality of PFs. In other words, a quantity of PEIs is the same as a quantity of PFs.

Optionally, in another manner, one PEI may correspond to a plurality of PFs. For example, an SSB periodicity includes four PFs, a PEI #1 corresponds to a PF #1 and a PF #2, and a PEI #2 corresponds to a PF #3 and a PF #4.

S420: UE #1 determines configuration information of a target PEI based on a target PF and a correspondence between a plurality of pieces of configuration information and the plurality of PFs.

It should be understood that the target PF is one of the plurality of PFs.

For example, if the target PF is the PF #1, the UE #1 determines, from the correspondence between the plurality of pieces of configuration information and the plurality of PFs, the configuration information of the target PEI corresponding to the PF #1.

In a possible manner, the plurality of pieces of configuration information and the correspondence between the plurality of pieces of configuration information and the plurality of PFs may be preconfigured in the UE #1.

The following describes the plurality of pieces of configuration information.

Case 1:

The plurality of pieces of configuration information includes information about a plurality of RNTIs. The plurality of PEIs are in a one-to-one correspondence with the plurality of RNTIs. In other words, RNTIs configured for the PEIs may be different.

Case 2:

The plurality of pieces of configuration information includes information about a plurality of search space sets (search space sets). The plurality of PEIs are in a one-to-one correspondence with the plurality of search space sets. In other words, search space sets configured for the PEIs may be different.

Case 3:

The plurality of pieces of configuration information include information about a same search space set and a plurality of initial monitoring occasions (firstPDCCH-MonitoringOccasionOfPEI). The plurality of PEIs are in a one-to-one correspondence with the plurality of initial monitoring occasions, and monitoring occasions corresponding to the plurality of PEIs do not overlap each other. In other words, initial monitoring occasions configured for the PEIs may be different.

In a possible manner, it is assumed that an SS burst set includes four SSBs, an SSB periodicity includes two PFs, and each PF includes two POs. In this case, each PO included in one PF includes four MOs, and the four MOs are in a one-to-one correspondence with four SSBs.

In this case, two PEIs may be used to correspond to two PFs. APEI#1 indicates whether the UE monitors a PF #1, and a PEI #2 indicates whether the UE monitors a PF #2.

To distinguish between monitoring occasions of the PEI #1 and the PEI #2, an initial monitoring occasion of the PEI #1 may be configured as a $K^{th}$ monitoring occasion in the search space set, and an initial monitoring occasion of the PEI #2 may be configured as a $(K+4)^{th}$ monitoring occasion in the search space set. In this way, monitoring occasions corresponding to the two PEIs do not overlap each other.

S430: The base station #1 sends the plurality of PEIs.

S440: The UE #1 receives the target PEI based on the configuration information of the target PEI.

It should be understood that the target PEI is one of the plurality of PEIs.

S450: The UE #1 determines, based on the target PEI, whether to monitor the target PF.

It should be understood that the target PF corresponds to the target PEI.

It should be understood that the UE #1 needs to parse only the target bit corresponding to the target subgroup in the target PO of the target PF, and may not parse another bit in the PI field.

According to the solution in this application, if an SSB periodicity includes a plurality of PFs, a plurality of PEIs may be configured for the plurality of PFs, so that a quantity of bits of a PI field in each of the plurality of PEIs is not excessively large, to ensure that the PEI is well received.

Optionally, before S420, the method 400 further includes S460.

S460: The base station #1 sends fourth information to the UE #1. Correspondingly, the UE #1 receives the fourth information.

The fourth information includes the plurality of pieces of configuration information, and the plurality of pieces of configuration information are used to configure the plurality of PEIs.

Optionally, the fourth information further includes the correspondence between the plurality of pieces of configuration information and the plurality of PFs.

In addition, in a special case, an SSB periodicity includes a plurality of PFs, but configuration information of a plurality of PEIs corresponding to the plurality of PFs is the same (for example, the plurality of PEIs correspond to a same RNTI and a same monitoring occasion). In this case, the plurality of PEIs may be actually sent by using one PEI PDCCH. In other words, whether paging exists on the plurality of PFs is indicated by one PEI, and PO subgroups of POs on different PFs are mapped to a same target bit. For details, refer to the descriptions in S330. Details are not described herein again.

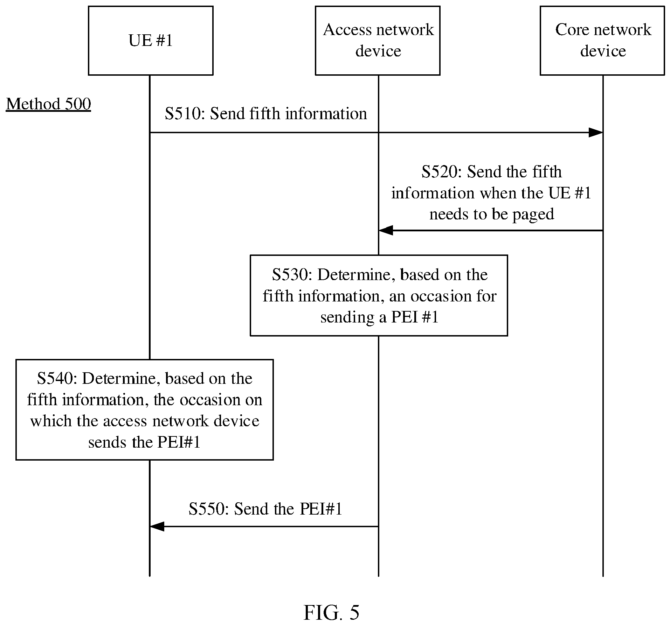

FIG. 5 shows a communication method 500 according to this application. The method 500 includes the following steps.

S510: UE #1 sends fifth information to a network device. Correspondingly, the network device receives the fifth information.

For example, the UE #1 may send the fifth information to the network device in a process of establishing an RRC connection or after establishing an RRC connection.

In a case, the UE #1 may send the fifth information to a core network device.

The following describes the fifth information.

Manner 1:

The fifth information directly indicates a quantity of SS burst sets that need to be received before a paging PDCCH is received.

For example, the fifth information includes information in which a value of L is 2.

Manner 2:

The fifth information indicates duration in which the UE #1 needs to be woken up in advance to receive a paging PDCCH. The UE #1 needs to perform one or more of the following operations within the duration: time-frequency tracking, automatic gain control (automatic gain control, AGC), SIR estimation, and beam measurement.

It should be understood that, when Manner 2 is used, after receiving the fifth information, the network device may indirectly calculate a quantity of SS burst sets that need to be received by the UE #1 before the UE #1 receives the paging PDCCH.

S520: The core network device sends eighth information to an access network device. Correspondingly, the access network device receives the eighth information.

A meaning expressed by the eighth information is the same as that expressed by the fifth information.

For example, the eighth information directly indicates the quantity of SS burst sets that need to be received by the UE #1 before the UE #1 receives the paging PDCCH. Alternatively, the eighth information indicates the duration in which the UE #1 needs to be woken up in advance to receive the paging PDCCH.

It should be understood that when the UE #1 needs to be paged, the core network device may further send a paging message for the UE #1 to the access network device.

S530: The access network device determines, based on the eighth information, an occasion for sending the PEI (denoted as the PEI#1) corresponding to the UE #1.

The following describes a manner in which the access network device determines, based on the eighth information, the occasion for sending the PEI #1.

Manner 1:

For example, if the eighth information indicates that the UE #1 needs to receive one SS burst set before receiving the paging PDCCH, the access network device sends the PEI #1 after a first SS burst (SS burst) set before sending the paging PDCCH.

For another example, if the eighth information indicates that the UE #1 needs to receive two SS burst sets before receiving the paging PDCCH, the access network device sends the PEI #1 between a second SS burst set and a first SS burst set before sending the PDCCH.

For another example, if the eighth information indicates that the UE #1 needs to receive three SS burst sets before receiving the paging PDCCH, the access network device sends the PEI #1 between a third SS burst set and a second SS burst set before sending the PDCCH.

Manner 2:

The access network device determines, based on the eighth information, that a time interval between an occasion for sending the PEI #1 and an occasion for sending the paging PDCCH that needs to be received by the UE #1 needs to be greater than or equal to a time offset (Time_offset). Time_offset is a time amount related to the quantity of SS burst sets that need to be received by the UE #1 before the UE #1 receives the paging PDCCH. For example, Time_offset may be calculated according to one of the following formulas:

$$\text{Formula 1: Time\_offset} = \text{mini\_gap} + (L-1)*\text{SSB\_periodicity}$$

$$\text{Formula 2: Time\_offset} = (L-1)*\text{SSB\_periodicity}$$

$$\text{Formula 3: Time\_offset} = \max[\text{mini\_gap}, (L-1)*\text{SSB\_periodicity}]$$

Herein, mini_gap represents a minimum time interval between sending the PEI and sending the paging PDCCH; L represents the quantity of SS burst sets that need to be received by the UE #1 before the UE #1 receives the paging PDCCH; SSB_periodicity represents a sending periodicity of the SS burst set, which is generally 20 ms, 40 ms, 80 ms, 160 ms, or the like; and "*" represents multiplication.

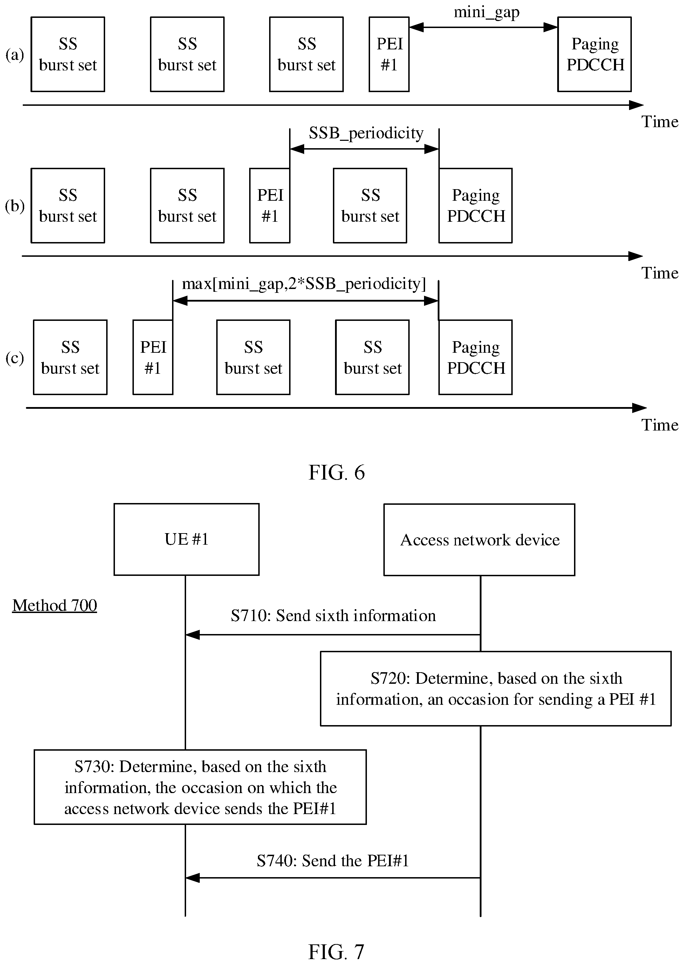

For example, as shown in (a) in FIG. 6, the eighth information indicates that the UE #1 needs to receive one SS burst set before receiving the paging PDCCH. If calculation is performed according to Formula 1, the time interval between the occasion for sending the PEI #1 and the occasion for sending the paging PDCCH needs to be greater than or equal to mini_gap.

It should be understood that the access network device may learn of the occasion for sending the paging PDCCH.

For another example, as shown in (b) in FIG. 6, the eighth information indicates that the UE #1 needs to receive two SS burst sets before receiving the paging PDCCH. If calculation is performed according to Formula 2, the time interval between the occasion for sending the PEI #1 and the occasion for sending the paging PDCCH needs to be greater than or equal to one SSB_periodicity.

For another example, as shown in (c) in FIG. 6, the eighth information indicates that the UE #1 needs to receive three SS burst sets before receiving the paging PDCCH. If calculation is performed according to Formula 3, the time interval between the occasion for sending the PEI #1 and the occasion for sending the paging PDCCH needs to be greater than or equal to a larger value between mini_gap and 2*SSB_periodicity.

Optionally, in a manner, the method may not include S530. In S520, the core network device may determine the occasion for sending the PEI #1, and notify the access network device of the occasion for sending the PEI #1. For a manner in which the core network device determines to send the PEI#1, refer to Manner 1 and Manner 2 in S530. In other words, the core network device performs the operation of the access network device in S530.

Optionally, the UE #1 may directly send the fifth information to the access network device, instead of sending the eighth information to the access network device through the core network device.

S540: The UE #1 determines, based on the fifth information, an occasion on which the access network device sends the PEI #1.

This process is similar to S530, that is, the UE #1 performs the operation of the access network device in S530.

S550: The access network device sends the PEI #1 on the occasion for sending the PEI #1. Correspondingly, the UE #1 monitors the PEI #1 on the occasion for sending the PEI #1.

According to the solution in this application, when values of L reported by different UEs are different, the access network device may determine, based on the different values of L, occasions for sending PEIs corresponding to the different UEs. In comparison, if the values of L of the UEs are not distinguished, an optimal effect of power consumption reduction may not be achieved when the access network device sends the PEIs. Therefore, according to the solution in this application, the access network device determines, based on the values of L reported by the UEs, a sending occasion of the PEI corresponding to each UE, so that power consumption can be better reduced.

FIG. 7 shows a communication method 700 according to this application. The method 700 includes the following steps.

S710: An access network device sends sixth information, where the sixth information indicates that an occasion for sending a PEI #1 is after a last $N^{th}$ SS burst set that is before a target PO. Correspondingly, UE #1 receives the sixth information.

N is a positive integer. For example, N is 1, 2, or 3.

A value of N may be considered as a default value used by UE in a target cell to determine an occasion for sending a PEI. The target cell is a cell to which the access network device belongs.

For example, the access network device may add the sixth information to a system message, and send the sixth information in a broadcast manner.

It should be understood that the target cell is a cell to which the access network device belongs.

S720: The access network device determines, based on the sixth information, the occasion for sending the PEI (denoted as the PEI#1) corresponding to the UE #1.

This process is similar to S530, that is, the fifth information in S530 is replaced with the sixth information.

S730: The UE #1 determines, based on the sixth information, the occasion on which the access network device sends the PEI #1.

This process is similar to S530, that is, the UE #1 performs the operation of the access network device in S530.

S740: The access network device sends the PEI #1 on the occasion for sending the PEI #1. Correspondingly, the UE #1 monitors the PEI #1 on the occasion for sending the PEI #1.

According to the solution in this application, alternatively, the UE may not report the value of L of the UE, and determine, by receiving the sixth information from the access network device, the occasion for monitoring the PEI.

Optionally, in a case, the method 700 is applicable to a scenario in which the UE #1 is powered on for the first time and camps on the target cell.

Optionally, in another case, the method 700 is applicable to a scenario in which a location of the UE #1 is not fixed, and the UE #1 frequently moves, and moves (hands over) from a source cell to the target cell.

Optionally, in a case, the method 700 may be performed before the method 500. In other words, the method 500 and the method 700 are not isolated, and may be used together.

For example, when the UE #1 is powered on for the first time and camps on the target cell, the UE #1 may monitor the PEI #1 according to the method 700, and subsequently, the UE #1 may monitor the PEI #1 according to the method 500.

It should be understood that, in the method 500 and the method 700, the UE #1 is used as an example to describe in detail the solutions provided in this application. For other UE, such as UE #2 and UE #3, a similar method may be performed. In other words, the UE #1 in the method 500 and the method 700 may be replaced with other UE.

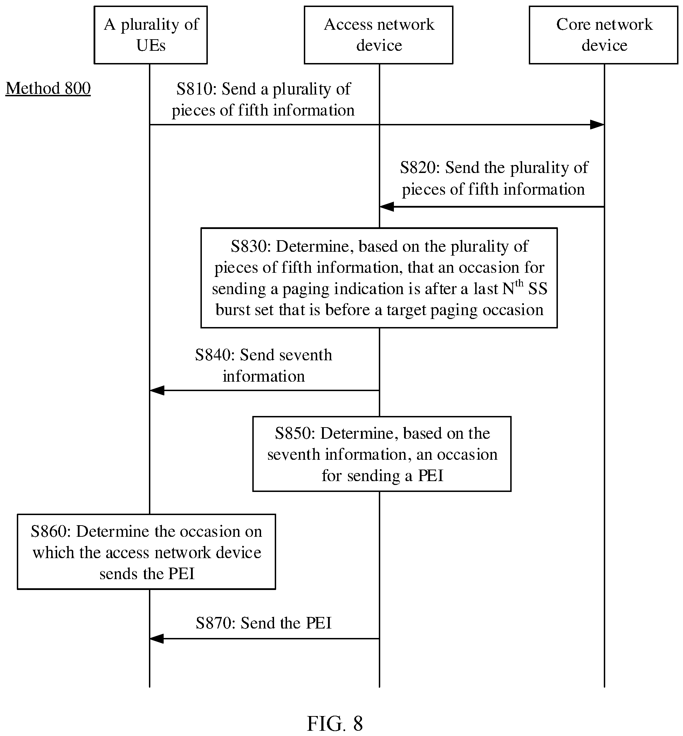

FIG. 8 shows a communication method 800 according to this application. The method 800 includes the following steps.

S810: A plurality of UEs send a plurality of pieces of fifth information to a network device, where the plurality of pieces of fifth information are in a one-to-one correspondence with the plurality of UEs. Correspondingly, the network device receives the plurality of pieces of fifth information.

For example, the plurality of UEs may send the plurality of pieces of fifth information to the network device in an RRC connection process or after an RRC connection is established.

In a case, the plurality of UEs may send the plurality of pieces of fifth information to a core network device.

It should be understood that the plurality of UEs may be a plurality of UEs in a same target cell, or may be a plurality of UEs in a tracking area (tracking area, TA) that includes a plurality of cells. The target cell is a cell to which an access network device belongs.

Each of the plurality of pieces of fifth information indicates a quantity (denoted as L) of SS burst sets that need to be received by corresponding UE before the UE receives a paging PDCCH.

For example, the plurality of pieces of fifth information are information #A, information #B, information #C, and information #D. The information #A indicates a quantity of SS burst sets that need to be received by UE #1 before the UE #1 receives a paging PDCCH, the information #B indicates a quantity of SS burst sets that need to be received by UE #2 before the UE #2 receives a paging PDCCH, the information #C indicates a quantity of SS burst sets that need to be received by UE #3 before the UE #3 receives a paging PDCCH, and the information #D indicates a quantity of SS burst sets that need to be received by UE #4 before the UE #4 receives the paging PDCCH.

Alternatively, each of the plurality of pieces of fifth information indicates duration in which a corresponding terminal device needs to be woken up in advance to receive a paging PDCCH.

S820: The core network device sends a plurality of pieces of ninth information to the access network device. Correspondingly, the access network device receives the plurality of pieces of ninth information.

A meaning expressed by the plurality of pieces of ninth information is the same as that expressed by the plurality of pieces of fifth information.

For example, each of the plurality of pieces of ninth information indicates a quantity (denoted as L) of SS burst sets that need to be received by corresponding UE before the UE receives a paging PDCCH. Alternatively, each of the plurality of pieces of ninth information indicates duration in which a corresponding terminal device needs to be woken up in advance to receive a paging PDCCH.

The core network device may send the plurality of pieces of ninth information to one access network device, or may send the plurality of pieces of ninth information to a plurality of access network devices in a tracking area.

It should be understood that when UE is paged, the core network device further needs to send a paging message of the UE to the access network device.

For example, when the UE #1 is paged, the core network device sends a paging message for the UE #1 to the access network device.

S830: The access network device determines, based on the plurality of pieces of ninth information, that an occasion for sending a paging indication is after a last $N^{th}$ SS burst set that is before a target paging occasion, where N is a positive integer.

In a possible manner, the access network device may determine a value of L that appears most frequently in a plurality of values of L corresponding to the plurality of UEs, and a value of N may be the value of L that appears most frequently.

For example, in 10 UEs, if the value 2 of L appears most frequently, the value of N is 2.

In another possible manner, when values of L corresponding to UEs whose quantity exceed a first threshold in the plurality of UEs are all specified values, a value of N is equal to the specified value.

For example, if more than eight UEs in 10 UEs correspond to a value 2 of L, the value of N is 2.

In another possible manner, the access network device determines an average value of values of L corresponding to the plurality of UEs, and determines that a value of N is equal to the average value.

For example, as shown in the following table, the access network device determines that the value of N is 2.

**Table 1**

| UE | Value of L |
|---|---|
| UE #1 | 1 |
| UE #2 | 2 |
| UE #3 | 3 |
| Average value | 2 |

Optionally, in a manner, the method may not include S830. In S820, the core network device may determine, based on the plurality of pieces of fifth information, that the occasion for sending the paging indication is after the last $N^{th}$ SS burst set that is before the target paging occasion, and send a determining result to the access network device.

Optionally, the plurality of UEs may directly send the plurality of pieces of fifth information to the access network device, without sending the plurality of pieces of ninth information through the core network device.

S840: The access network device sends seventh information, where the seventh information indicates that the occasion for sending the paging indication is after the last $N^{th}$ SS burst set that is before the target paging occasion. Correspondingly, the plurality of UEs receive the seventh information.

In a possible manner, the access network device may add the seventh information to a system message, and send the seventh information in a broadcast manner.

S850: The access network device determines, based on the seventh information, the occasion for sending the PEI.

For this process, refer to Manner 1 and Manner 2 in S530. Details are not described herein again.

S860: Each of the plurality of UEs determines, based on the seventh information, an occasion on which the access network device sends the PEI.

S870: The access network device sends the PEI on the occasion for sending the PEI. Correspondingly, the plurality of UEs monitor the PEIs on occasions for sending the PEIs.

According to the solution in this application, the network device may determine, based on the values of L reported by the plurality of UEs, that the occasion for sending the paging indication is after the last $N^{th}$ SS burst set that is before the target paging occasion, and send the determined result to the plurality of UEs, to better reduce power consumption.

Optionally, in a case, the method 700 may be performed before the method 800. In other words, the method 700 and the method 800 are not isolated, and may be used together. In this case, the plurality of UEs in the method 800 include the UE #1 in the method 700.

For example, when the UE #1 is powered on for the first time and camps on the target cell, the UE #1 may monitor the PEI #1 according to the method 700. Subsequently, the UE #1 may determine, based on the seventh information, the occasion on which the access network device sends the PEI, and monitor the PEI based on the occasion.

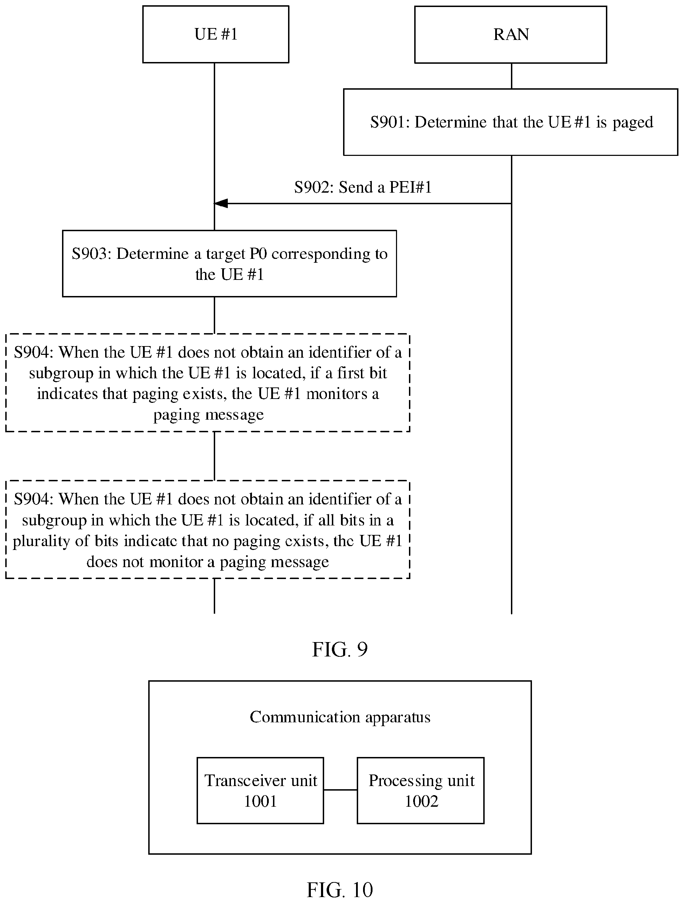

FIG. 9 shows another method according to this application.

Before the method is described, a manner in which UE obtains an identifier of a subgroup in which the UE is located (denoted as a UE subgroup ID) is first described.

Manner 1:

The UE determines the UE subgroup ID based on a UE identifier (UE_ID). The UE_ID is generally an ID allocated by an access network. For example, the UE_ID may be an RNTI allocated by a gNB.

For example, UE subgroup ID = UE_ID mod M. Herein, mod represents a modulo operation, and M represents a quantity of subgroups into which UEs in each PO are divided.

Manner 2:

After the UE enters a connected state, a core network element (for example, an access and mobility management function (access and mobility management function, AMF) network element) allocates the UE subgroup ID to the UE.

For example, the AMF sends NAS signaling to the UE through a RAN, and the NAS signaling includes the UE subgroup ID.

The method shown in FIG. 9 includes the following steps.

S901: The RAN determines that UE #1 is paged.

A PO corresponding to the UE #1 is a target PO.

S902: The RAN sends a PEI #1. Correspondingly, the UE #1 receives the PEI #1.

The PEI #1 is associated with at least one PO, the at least one PO includes the target PO, the target PO corresponds to a plurality of bits in the PEI #1, and the plurality of bits correspond to a plurality of subgroups. For example, whether paging exists in each of the plurality of subgroups is indicated by each of the plurality of bits.

For example, when an identifier of a subgroup in which the UE #1 is located is not obtained, at least one of the plurality of bits indicates that paging exists.

In an implementation, if a value of a bit is "1", it indicates that paging exists; or if a value of a bit is "0", it indicates that paging does not exist. In other words, when the identifier of the subgroup in which the UE #1 is located is not obtained, the RAN sets at least one of the plurality of bits to "1".

It is assumed that the plurality of bits are a bit #1 to a bit #4.

For example, the RAN may randomly select a bit from the bit #1 to the bit #4, and set a value of the bit to "1".

For example, the RAN may fixedly set one of the bit #1 to the bit #4 to "1".

For example, the RAN may determine a bit from the bit #1 to the bit #4 according to a principle of reducing a false alarm rate as much as possible, and set a value of the bit to "1". For example, the RAN may alternatively set a bit different from a previous bit to 1 as much as possible, to reduce a probability that a same subgroup is falsely detected. In a special case, if paging exists in a subgroup indicated by a bit in the bit #1 to the bit #4, the RAN does not need to set a value of another bit from 0 to 1.

S903: The UE #1 determines the target PO corresponding to the UE #1.

The target PO corresponds to the plurality of bits in the PEI #1.

S904: In a first possible case, when the UE #1 does not obtain the identifier of the subgroup in which the UE #1 is located, if a first bit indicates that paging exists, the UE #1 monitors a paging message. The first bit is any one of the plurality of bits.

In other words, when the UE #1 does not obtain the identifier of the subgroup in which the UE #1 is located, if any one of the plurality of bits indicates that paging exists, the UE #1 monitors the paging message (monitoring the paging message means to monitor a paging PDCCH on the target PO).

In a second possible case, when the UE #1 does not obtain the identifier of the subgroup in which the UE #1 is located, if all bits in the plurality of bits indicate that no paging exists, the UE #1 does not monitor a paging message.

The following uses several examples to describe a case in which the UE #1 does not obtain the identifier of the subgroup in which the UE #1 is located.

Example 1:

The UE #1 has not entered a connected state, and the core network element cannot send NAS signaling to the UE #1. In this case, the UE #1 does not obtain the identifier of the subgroup in which the UE #1 is located. However, the RAN sends the PEI by using a method for allocating a subgroup identifier based on a core network element.

Example 2:

The UE #1 supports only a UE_ID-based subgroup identifier allocation method, but the RAN sends the PEI by using a method for allocating a subgroup identifier based on a core network element.

Example 3:

The UE #1 does not support a PEI subgroup division mechanism, but the RAN still sends the PEI in a subgroup-based manner (a quantity of divided subgroups of each PO in the PEI is greater than 1).

For example, before S902, the method further includes the following step.

S905: The RAN sends a system message. Correspondingly, the UE #1 receives the system message.

The system message includes the following content:

a payload size (payload size) of the PEI #1, a PO corresponding to the PEI #1, and a quantity of groups into which UEs in each PO are divided.

The UE may determine, based on the system message, a quantity of bits corresponding to the target PO and locations of the plurality of bits corresponding to the target PO in the PEI #1.

According to the method in FIG. 9, when the UE #1 does not obtain the UE subgroup ID, the UE may still learn whether to wake up and monitor the paging PDCCH in the PO of the UE #1, to implement a power consumption reduction effect.

According to the foregoing methods, FIG. 10 shows a communication apparatus according to an embodiment of this application. The communication apparatus includes a transceiver unit 1001 and a processing unit 1002.

The transceiver unit 1001 may be configured to implement a corresponding communication function. The transceiver unit 1001 may also be referred to as a communication interface or a communication unit. The processing unit 1002 may be configured to perform a processing operation.

Optionally, the apparatus further includes a storage unit. The storage unit may be configured to store instructions and/or data. The processing unit 1002 may read the instructions and/or the data in the storage unit, so that the apparatus implements actions of the apparatus in the foregoing method embodiments.

In a first design, the apparatus may be the network device in the foregoing embodiments, or may be a component (for example, a chip) of the network device.

The processing unit is configured to determine, based on a quantity of all POs associated with a first PEI and a quantity of bits of a PI field in the first PEI, a quantity of subgroups included in each of all the POs associated with the first PEI; the processing unit is further configured to determine a bit value of each bit in the PI field based on the quantity of subgroups included in each of all the POs associated with the first PEI; and the transceiver unit is configured to send the first PEI to a terminal device.

In a case, the transceiver unit is further configured to send first information and second information to the terminal device, where the first information indicates the quantity of all POs associated with the first PEI, and the second information indicates the quantity of bits of the PI field in the first PEI.

In a case, the processing unit is further configured to determine, based on the quantity of paging frames PFs associated with the first PEI and a quantity of POs included in each PF, the quantity of all POs associated with the first PEI.

In a second design, the apparatus may be the terminal device in the foregoing embodiments, or may be a component (for example, a chip) of the terminal device.

The processing unit is configured to determine, based on a quantity of all paging occasions POs associated with a first PEI and a quantity of bits of a PI field in the first PEI, a location of a target bit in the PI field; the transceiver unit is configured to receive the first PEI from a network device; and the processing unit is further configured to determine, based on the first PEI and the target bit, whether to monitor a paging message.

In a case, the processing unit is further configured to determine a target PO to which the terminal device belongs; the processing unit is further configured to determine, based on the quantity of all POs associated with the first PEI and the quantity of bits of the PI field, a quantity of subgroups included in each of all the POs associated with the first PEI; the processing unit is further configured to determine a target subgroup of the terminal device in the target PO based on the quantity of subgroups included in each of all the POs associated with the first PEI; and the processing unit is further configured to determine the location of the target bit in the PI field based on the target PO and the target subgroup.

In a case, the transceiver unit is further configured to receive first information and second information from the network device, where the first information indicates the quantity of all POs associated with the first PEI, and the second information indicates the quantity of bits of the PI field in the first PEI.

In a case, the processing unit is further configured to determine, based on the quantity of paging frames PFs associated with the first PEI and a quantity of POs included in each PF, the quantity of all POs associated with the first PEI.

In a third design, the apparatus may be the network device in the foregoing embodiments, or may be a component (for example, a chip) of the network device.

The processing unit is configured to determine, based on a quantity of all POs associated with a first PEI and a quantity of subgroups included in each of all the POs associated with the first PEI, a total quantity of subgroups included in all the POs associated with the first PEI; when the total quantity of subgroups is greater than a specific threshold, the processing unit is further configured to determine a bit value of each bit in a PI field based on a first mapping manner, where the first mapping manner is a mapping manner in which at least two subgroups are mapped to a same bit in the PI field; and the transceiver unit is configured to send the first PEI to a terminal device.

In a case, when the total quantity of subgroups is less than or equal to the specific threshold, or there is no specific threshold, the processing unit is further configured to determine the bit value of each bit in the PI field based on a second mapping manner, where the second mapping manner is a mapping manner in which the subgroups included in all the POs associated with the first PEI are in a one-to-one correspondence with a plurality of bits of the PI field.

In a case, the transceiver unit is further configured to send first information and third information to the terminal device, where the first information indicates the quantity of all POs associated with the first PEI, and the third information indicates the quantity of subgroups included in each of all the POs associated with the first PEI.

In a fourth design, the apparatus may be the terminal device in the foregoing embodiments, or may be a component (for example, a chip) of the terminal device.

The processing unit is configured to determine, based on a quantity of all POs associated with a first PEI and a quantity of subgroups included in each of all the POs associated with the first PEI, a total quantity of subgroups included in all the POs associated with the first PEI; when the total quantity of subgroups is greater than a specific threshold, the processing unit is further configured to determine a location of a target bit in a PI field in the first PEI based on a first mapping manner, where the first mapping manner is a mapping manner in which at least two subgroups are mapped to a same bit in the PI field; the transceiver unit is configured to receive the first PEI from a network device; and the processing unit is further configured to determine, based on the first PEI and the target bit, whether to monitor a paging message.

In a case, when the total quantity of subgroups is less than or equal to the specific threshold, or there is no specific threshold, the processing unit is configured to determine the location of the target bit in the PI field based on a second mapping manner, where the second mapping manner is a mapping manner in which the subgroups included in all the POs associated with the first PEI are in a one-to-one correspondence with a plurality of bits of the PI field.

In a case, the processing unit is configured to determine a target PO to which the terminal device belongs and a target subgroup of the terminal device in the target PO.

In a case, the transceiver unit is further configured to receive first information and third information from the network device, where the first information indicates the quantity of all POs associated with the first PEI, and the third information indicates the quantity of subgroups included in each of all the POs associated with the first PEI.

In a fifth design, the apparatus may be the network device in the foregoing embodiments, or may be a component (for example, a chip) of the network device.

When a synchronization signal block SSB periodicity includes a plurality of paging frames PFs, the processing unit is configured to generate a plurality of PEIs, where the plurality of PEIs correspond to the plurality of PFs; and the transceiver unit is configured to send the plurality of PEIs.

In a case, the transceiver unit is further configured to send fourth information to a terminal device, where the fourth information includes a plurality of pieces of configuration information.

In a sixth design, the apparatus may be the terminal device in the foregoing embodiments, or may be a component (for example, a chip) of the terminal device.

The processing unit is configured to determine configuration information of a target PEI based on a target PF and a correspondence between a plurality of pieces of configuration information and a plurality of PFs; the transceiver unit is configured to receive the target PEI from a network device based on the configuration information of the target PEI; and the processing unit is further configured to determine, based on the target PEI, whether to monitor the target PF, where the target PF corresponds to the target PEI.

In a case, the transceiver unit is further configured to receive fourth information from the network device, where the fourth information includes the plurality of pieces of configuration information.

In a seventh design, the apparatus may be the terminal device in the foregoing embodiments, or may be a component (for example, a chip) of the terminal device.

The transceiver unit is configured to send fifth information; the processing unit is configured to determine, based on a quantity of SS burst sets, an occasion on which an access network device sends a paging indication, where the paging indication includes information about whether paging of the terminal device exists; and the transceiver unit is further configured to monitor the paging indication based on the occasion.

In an eighth design, the apparatus may be the access network device in the foregoing embodiments, or may be a component (for example, a chip) of the access network device.

The transceiver unit is configured to receive eighth information; the processing unit is configured to determine, based on the eighth information, an occasion for sending a paging indication, where the paging indication includes information about whether paging of a terminal device exists; and the transceiver unit is further configured to send the paging indication on the occasion.

In a ninth design, the apparatus may be the terminal device in the foregoing embodiments, or may be a component (for example, a chip) of the terminal device.

The transceiver unit is configured to send fifth information; the transceiver unit is further configured to receive seventh information, where the seventh information indicates that an occasion on which an access network device sends a paging indication is after a last $N^{th}$ SS burst set that is before a target paging occasion, and N is a positive integer; the processing unit is configured to determine, based on the seventh information, the occasion on which the access network device sends the paging indication; and the transceiver unit is further configured to monitor the paging indication based on the occasion for sending the paging indication, where the paging indication includes information about whether paging of the terminal device exists

In a tenth design, the apparatus may be the access network device in the foregoing embodiments, or may be a component (for example, a chip) of the access network device.

The transceiver unit is configured to receive a plurality of pieces of ninth information, where the plurality of pieces of ninth information is in a one-to-one correspondence with a plurality of terminal devices; the processing unit is configured to determine, based on the plurality of pieces of ninth information, that an occasion for sending a paging indication is after a last $N^{th}$ SS burst set that is before a target paging occasion, where N is a positive integer; the transceiver unit is configured to send seventh information, where the seventh information indicates that the occasion for sending the paging indication is after the $N^{th}$ SS burst set; and the transceiver unit is configured to send the paging indication on the occasion for sending the paging indication.

It should be understood that a specific process in which the units perform the corresponding steps is described in detail in the method embodiments. For brevity, details are not described herein.

It should also be understood that the apparatus herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus may be specifically the first network element in the foregoing embodiments, and may be configured to perform the procedures and/or steps corresponding to the first network element in the foregoing method embodiments. Alternatively, the apparatus may be specifically the network management network element in the foregoing embodiments, and may be configured to perform the procedures and/or steps corresponding to the network management network element in the foregoing method embodiments. To avoid repetition, details are not described herein again.

The foregoing communication apparatus has a function of implementing corresponding steps performed by the apparatus in the foregoing methods. The function may be implemented by hardware, or may be implemented by executing corresponding software by hardware. The hardware or software includes one or more modules corresponding to the function. For example, a transceiver unit may be replaced with a transceiver (for example, a sending unit in the transceiver unit may be replaced with a transmitter, and a receiving unit in the transceiver unit may be replaced with a receiver), and another unit like a processing unit may be replaced with a processor, to separately perform sending and receiving operations and a related processing operation in the method embodiments.

In addition, the transceiver unit 1001 may alternatively be a transceiver circuit (for example, may include a receiver circuit and a transmitter circuit), and the processing unit may be a processing circuit.

It should be noted that the apparatus in FIG. 10 may be the apparatus in the foregoing method embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

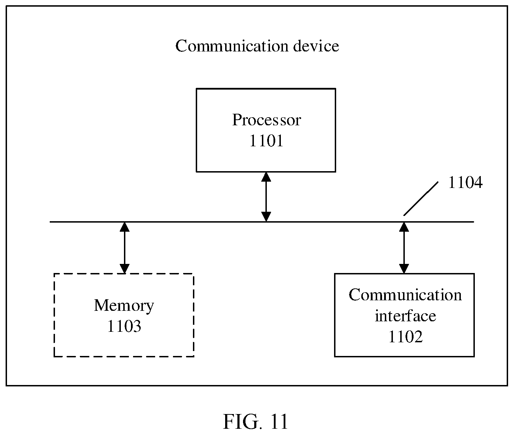

An embodiment of this application further provides a communication device. As shown in FIG. 11, the communication device includes a processor 1101 and a communication interface 1102. The processor 1101 is configured to execute a computer program or instructions stored in a memory 1103, or read data stored in the memory 1103, to perform the methods in the foregoing method embodiments. Optionally, there are one or more processors 1101. The communication interface 1102 is configured to receive and/or send a signal. For example, the processor 1101 is configured to control the communication interface 1102 to receive and/or send a signal.

Optionally, as shown in FIG. 11, the communication device further includes the memory 1103, and the memory 1103 is configured to store a computer program or instructions and/or data. The memory 1103 may be integrated with the processor 1101, or may be disposed separately. Optionally, there are one or more memories 1103.

Optionally, the processor 1101, the communication interface 1102, and the memory 1103 are connected to each other through a bus 1104. The bus 1104 may be a peripheral component interconnect (peripheral component interconnect, PCI) bus, an extended industry standard architecture (extended industry standard architecture, EISA) bus, or the like. The bus 1104 may be classified into an address bus, a data bus, a control bus, and the like. For ease of representation, only one bold line is used to represent the bus in FIG. 11, but this does not mean that there is only one bus or only one type of bus.

In a solution, the communication device is configured to implement operations performed by the communication device, the network device, the primary base station, or the first secondary base station in the foregoing method embodiments.

For example, the processor 1101 is configured to execute the computer program or the instructions stored in the memory 1103, to implement related operations of the network device in the method embodiments.

For another example, the processor 1101 is configured to execute the computer program or the instructions stored in the memory 1103, to implement related operations of the terminal device in the method embodiments.

It should be understood that a processor (for example, the processor 1101) mentioned in embodiments of this application may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic logic array (generic logic array, GAL), or any combination thereof.

It should be further understood that a memory (for example, the memory 1103) mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and used as an external cache.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

determining, by a network device based on a quantity of all paging occasions POs associated with a first paging indication and a quantity of bits of a paging indication PI field in the first paging indication, a quantity of subgroups comprised in each of all the POs associated with the first paging indication;

determining, by the network device, a bit value of each bit in the PI field based on the quantity of subgroups comprised in each of all the POs associated with the first paging indication and whether paging exists in a terminal device in each of subgroups comprised in all the POs associated with the first paging indication; and

sending, by the network device, the first paging indication.

2. The method according to claim 1, wherein the method further comprises:

sending, by the network device, first information and second information, wherein
the first information indicates the quantity of all POs associated with the first paging indication or a quantity of paging frames PFs associated with the first paging indication; and
the second information indicates the quantity of bits of the PI field.

3. The method according to claim 1 or 2, wherein the method further comprises:
determining, by the network device based on the quantity of paging frames PFs associated with the first paging indication and a quantity of POs comprised in each PF, the quantity of all POs associated with the first paging indication.

4. The method according to any one of claims 1 to 3, wherein
the quantity of bits of the PI field is related to the quantity of all POs associated with the first paging indication.

5. The method according to claim 4, wherein
that the quantity of bits of the PI field is related to the quantity of all POs associated with the first paging indication comprises:

when the quantity of all POs associated with the first paging indication is less than or equal to a first value, the quantity of bits of the PI field is a second value; or
when the quantity of all POs associated with the first paging indication is greater than a first value, the quantity of bits of the PI field is a third value, and the third value is greater than a second value.

6. The method according to any one of claims 1 to 5, wherein
the quantity of bits of the PI field is less than or equal to a specific threshold.

7. The method according to claim 6, wherein
the specific threshold is associated with a quantity of bits of downlink control information DCI of a paging physical downlink control channel PDCCH.

8. A communication method, comprising:

determining, by a terminal device based on a quantity of all paging occasions POs associated with a first paging indication and a quantity of bits of a paging indication PI field in the first paging indication, a location of a target bit in the PI field;
receiving, by the terminal device, the first paging indication from a network device; and
determining, by the terminal device based on the first paging indication and the target bit, whether to monitor a paging message.

9. The method according to claim 8, wherein
the method further comprises:

determining, by the terminal device, a target PO to which the terminal device belongs; and
the determining, by a terminal device based on a quantity of all POs associated with a first paging indication and a quantity of bits of a PI field in the first paging indication, a location of a target bit in the PI field comprises:

determining, by the terminal device based on the quantity of all POs associated with the first paging indication and the quantity of bits of the PI field, a quantity of subgroups comprised in each of all the POs associated with the first paging indication;

determining, by the terminal device, a target subgroup of the terminal device in the target PO based on the quantity of subgroups comprised in each of all the POs associated with the first paging indication; and determining, by the terminal device, the location of the target bit in the PI field based on the target PO and the target subgroup.

**10.** The method according to claim 8 or 9, wherein the method further comprises:

receiving, by the terminal device, first information and second information from the network device, wherein the first information indicates the quantity of all POs associated with the first paging indication or a quantity of paging frames PFs associated with the first paging indication; and the second information indicates the quantity of bits of the PI field.

**11.** The method according to any one of claims 8 to 10, wherein the method further comprises: determining, by the terminal device based on the quantity of PFs associated with the first paging indication and a quantity of POs comprised in each PF, the quantity of all POs associated with the first paging indication.

**12.** The method according to any one of claims 8 to 11, wherein the quantity of bits of the PI field is related to the quantity of all POs associated with the first paging indication.

**13.** The method according to claim 12, wherein that the quantity of bits of the PI field is related to the quantity of all POs associated with the first paging indication comprises:

when the quantity of all POs associated with the first paging indication is less than or equal to a first value, the quantity of bits of the PI field is a second value; or when the quantity of all POs associated with the first paging indication is greater than a first value, the quantity of bits of the PI field is a third value, and the third value is greater than a second value.

**14.** The method according to any one of claims 8 to 13, wherein the quantity of bits of the PI field is less than or equal to a specific threshold.

**15.** The method according to claim 14, wherein the specific threshold is associated with a quantity of bits of downlink control information DCI of a paging physical downlink control channel PDCCH.

**16.** A communication method, comprising:

determining, by a network device based on a quantity of all paging occasions POs associated with a first paging indication and a quantity of subgroups comprised in each of all the POs associated with the first paging indication, a total quantity of subgroups comprised in all the POs associated with the first paging indication; when the total quantity of subgroups is greater than a specific threshold, determining, by the network device, a bit value of each bit in a paging indication PI field of the first paging indication based on a first mapping manner, wherein the first mapping manner is a mapping manner in which at least two subgroups are mapped to a same bit in the PI field; and sending, by the network device, the first paging indication to a terminal device.

**17.** The method according to claim 16, wherein the method further comprises: when the total quantity of subgroups is less than or equal to the specific threshold, or there is no specific threshold, determining, by the network device, the bit value of each bit in the PI field based on a second mapping manner, wherein the second mapping manner is a mapping manner in which the subgroups comprised in all the POs associated with the first paging indication are in a one-to-one correspondence with a plurality of bits of the PI field.

**18.** The method according to claim 16 or 17, wherein the method further comprises:

sending, by the network device, first information and third information to the terminal device, wherein the first information indicates the quantity of all POs associated with the first paging indication or a quantity of PFs associated with the first paging indication; and

the third information indicates the quantity of subgroups comprised in each of all the POs.

19. The method according to any one of claims 16 to 18, wherein
the specific threshold is associated with a quantity of bits of downlink control information DCI of a paging physical downlink control channel PDCCH.

20. A communication method, comprising:

determining, by a terminal device based on a quantity of all paging occasions POs associated with a first paging indication and a quantity of subgroups comprised in each of all the POs associated with the first paging indication, a total quantity of subgroups comprised in all the POs associated with the first paging indication;
when the total quantity of subgroups is greater than a specific threshold, determining, by the terminal device, a location of a target bit in a paging indication PI field in the first paging indication based on a first mapping manner, wherein the first mapping manner is a mapping manner in which at least two subgroups are mapped to a same bit in the PI field;
receiving, by the terminal device, the first paging indication from a network device; and
determining, by the terminal device based on the first paging indication and the target bit, whether to monitor a paging message.

21. The method according to claim 20, wherein the method further comprises:
when the total quantity of subgroups is less than or equal to the specific threshold, or there is no specific threshold, determining, by the terminal device, the location of the target bit in the PI field based on a second mapping manner, wherein the second mapping manner is a mapping manner in which the subgroups comprised in all the POs associated with the first paging indication are in a one-to-one correspondence with a plurality of bits of the PI field.

22. The method according to claim 20 or 21, wherein the method further comprises:
determining, by the terminal device, a target PO to which the terminal device belongs and a target subgroup of the terminal device in the target PO.

23. The method according to any one of claims 20 to 22, wherein the method further comprises:

receiving, by the terminal device, first information and third information from the network device, wherein
the first information indicates the quantity of all POs associated with the first paging indication or a quantity of PFs associated with the first paging indication; and
the third information indicates the quantity of subgroups comprised in each of all the POs associated with the first paging indication.

24. The method according to any one of claims 20 to 23, wherein
the specific threshold is associated with a quantity of bits of downlink control information DCI of a paging physical downlink control channel PDCCH.

25. A communication method, comprising:

when a synchronization signal block SSB periodicity comprises a plurality of paging frames PFs, generating, by a network device, a plurality of paging indications, wherein the plurality of paging indications correspond to the plurality of PFs; and
sending, by the network device, the plurality of paging indications.

26. The method according to claim 25, wherein

a plurality of radio network temporary identifiers RNTIs of the plurality of paging indications are different; or
a plurality of search space sets of the plurality of paging indications are different; or
a plurality of initial monitoring occasions of the plurality of paging indications are different, the plurality of initial monitoring occasions are located in a same search space set, and monitoring occasions of the plurality of paging indications do not overlap each other.

27. The method according to claim 25 or 26, wherein the method further comprises:
sending, by the network device, fourth information to a terminal device, wherein the fourth information comprises a plurality of pieces of configuration information, and the plurality of pieces of configuration information are used to configure the plurality of paging indications.

28. A communication method, comprising:

determining, by a terminal device, configuration information of a target paging indication based on a target paging frame PF and a correspondence between a plurality of pieces of configuration information and a plurality of PFs;
receiving, by the terminal device, the target paging indication from a network device based on the configuration information of the target paging indication; and
determining, by the terminal device based on the target paging indication, whether to monitor the target PF, wherein the target PF corresponds to the target paging indication.

29. The method according to claim 28, wherein

the plurality of pieces of configuration information comprise information about a plurality of radio network temporary identifiers RNTIs, and the plurality of RNTIs correspond to a plurality of paging indications; or
the plurality of pieces of configuration information is information comprising a plurality of search space sets, and the plurality of search space sets correspond to a plurality of paging indications; or
the plurality of pieces of configuration information comprise information about a same search space set and information about a plurality of initial monitoring occasions, the plurality of initial monitoring occasions correspond to a plurality of paging indications, and monitoring occasions of the plurality of paging indications do not overlap each other.

30. The method according to claim 28 or 29, wherein the method further comprises:
receiving, by the terminal device, fourth information from the network device, wherein the fourth information comprises the plurality of pieces of configuration information, and the plurality of pieces of configuration information are used to configure the plurality of paging indications.

31. A communication apparatus, comprising a unit configured to perform the method according to any one of claims 1 to 30.

32. A communication device, comprising a communication interface and a processor, wherein the processor is configured to execute a computer program or instructions, so that the communication device performs the method according to any one of claims 1 to 30.

33. A computer-readable storage medium, comprising a computer program or instructions, wherein when the computer program or the instructions are run on a computer, the computer is enabled to perform the method according to any one of claims 1 to 30.

34. A computer program product, comprising instructions, wherein when the instructions are run on a computer, the computer is enabled to perform the method according to any one of claims 1 to 30.

100

Network
device

Terminal
device

FIG. 1

| Base station #1 | Method 200 | UE #1 |
|---|---|---|

S210: Determine, based on a quantity of all POs associated with a first PEI and a quantity of bits of a PI field in the first PEI, a quantity of subgroups included in each of all the POs associated with the first PEI

S220: Determine a location of a target bit in the PI field of the first PEI based on the quantity of all POs associated with the first PEI and the quantity of bits of the PI field in the first PEI

S230: Determine a bit value of each bit in the PI field of the first PEI based on the quantity of subgroups included in each of all the POs associated with the first PEI

S240: Send the first PEI

S250: Determine, based on the first PEI and the target bit, whether to monitor a paging message

FIG. 2

```
┌──────────────┐                                      ┌──────────────┐
│     Base     │            Method 300                │    UE #1     │
│  station #1  │                                      │              │
└──────┬───────┘                                      └──────┬───────┘
       │                                                     │
┌──────┴──────────────────────┐              ┌───────────────┴──────────────┐
│ S310: Determine, based on a │              │ S320: Determine, based on the│
│ quantity of all POs          │              │ quantity of all POs          │
│ associated with a first PEI  │              │ associated with the first PEI│
│ and a quantity of subgroups  │              │ and the quantity of subgroups│
│ included in each of all the  │              │ included in each of all the  │
│ POs associated with the      │              │ POs associated with the      │
│ first PEI, a total quantity  │              │ first PEI, the total quantity│
│ of subgroups included in all │              │ of subgroups included in all │
│ the POs associated with the  │              │ the POs associated with the  │
│ first PEI                    │              │ first PEI                    │
└──────┬──────────────────────┘              └───────────────┬──────────────┘
       │                                                     │
┌──────┴──────────────────────┐              ┌───────────────┴──────────────┐
│ S330: When the total        │              │ S340: When the total quantity│
│ quantity of subgroups is     │              │ of subgroups is greater than │
│ greater than a specific      │              │ the specific threshold,      │
│ threshold, determine a bit   │              │ determine a location of a    │
│ value of each bit in a PI    │              │ target bit in the PI field of│
│ field of the first PEI based │              │ the first PEI based on the   │
│ on a first mapping manner    │              │ first mapping manner         │
└──────┬──────────────────────┘              └───────────────┬──────────────┘
       │                                                     │
       │      S350: Send the first PEI                       │
       │────────────────────────────────────────────────────►│
       │                                                     │
       │                                      ┌───────────────┴──────────────┐
       │                                      │ S360: Determine, based on the│
       │                                      │ first PEI and the target bit,│
       │                                      │ whether to monitor a paging  │
       │                                      │ message                      │
       │                                      └───────────────┬──────────────┘
       │                                                     │
```

FIG. 3

Base
station #1

Method 400

UE #1

S410: When one SSB periodicity includes a plurality of PFs, the base station #1 generates a plurality of PEIs

S420: Determine configuration information of a target PEI based on a target PF and a correspondence between a plurality of pieces of configuration information and the plurality of PFs

S430: Send the plurality of PEIs

S440: Receive the target PEI based on the configuration information of the target PEI

S450: Determine, based on the target PEI, whether to monitor the target PF

FIG. 4

FIG. 5

(a)

| SS burst set | SS burst set | SS burst set | PEI #1 | | Paging PDCCH |

mini_gap

Time

(b)

SSB_periodicity

| SS burst set | SS burst set | PEI #1 | SS burst set | Paging PDCCH |

Time

(c)

max[mini_gap,2*SSB_periodicity]

| SS burst set | PEI #1 | SS burst set | SS burst set | Paging PDCCH |

Time

FIG. 6

UE #1　　　　　　　　Access network device

Method 700

S710: Send sixth information

S720: Determine, based on the sixth information, an occasion for sending a PEI #1

S730: Determine, based on the sixth information, the occasion on which the access network device sends the PEI#1

S740: Send the PEI#1

FIG. 7

Method 800

A plurality of UEs

Access network device

Core network device

S810: Send a plurality of pieces of fifth information

S820: Send the plurality of pieces of fifth information

S830: Determine, based on the plurality of pieces of fifth information, that an occasion for sending a paging indication is after a last $N^{th}$ SS burst set that is before a target paging occasion

S840: Send seventh information

S850: Determine, based on the seventh information, an occasion for sending a PEI

S860: Determine the occasion on which the access network device sends the PEI

S870: Send the PEI

FIG. 8

| UE #1 | | RAN |
|---|---|---|

S901: Determine that the UE #1 is paged

S902: Send a PEI#1

S903: Determine a target PO corresponding to
the UE #1

S904: When the UE #1 does not obtain an identifier of a
subgroup in which the UE #1 is located, if a first bit
indicates that paging exists, the UE #1 monitors a
paging message

S904: When the UE #1 does not obtain an identifier of a
subgroup in which the UE #1 is located, if all bits in a
plurality of bits indicate that no paging exists, the UE #1
does not monitor a paging message

FIG. 9

Communication apparatus

| Transceiver unit 1001 | Processing unit 1002 |
|---|---|

FIG. 10

Communication device

Processor
1101

1104

Memory
1103

Communication
interface
1102

FIG. 11

## INTERNATIONAL SEARCH REPORT

| International application No. |
| --- |
| **PCT/CN2022/129572** |

### A. CLASSIFICATION OF SUBJECT MATTER

H04W 68/00(2009.01)i; H04W 68/02(2009.01)i

According to International Patent Classification (IPC) or to both national classification and IPC

### B. FIELDS SEARCHED

Minimum documentation searched (classification system followed by classification symbols)

H04W68/-;H04W52/-

Documentation searched other than minimum documentation to the extent that such documents are included in the fields searched

Electronic data base consulted during the international search (name of data base and, where practicable, search terms used)

CNABS; CNTXT; CNKI; 百度, BAIDU; 万方, WANFANG; 寻呼指示, 寻呼提前指示, 寻呼早期指示, PEI, EPI, 寻呼时机, 寻呼机会, 寻呼时隙, PO, 个数, 寻呼指示域, PI域, 比特数, 子组数, 比特位置, 寻呼帧, PF, SSB周期, 映射; DWPI; VEN; USTXT; EPTXT; WOTXT; JPTXT; KRTXT; 3GPP: paging early indication, paging occasion, number, paging indication field, bit number, subgroup number, bit location, paging frame, SSB cycle, map+

### C. DOCUMENTS CONSIDERED TO BE RELEVANT

| Category* | Citation of document, with indication, where appropriate, of the relevant passages | Relevant to claim No. |
| --- | --- | --- |
| X | WO 2021018531 A1 (TELEFONAKTIEBOLAGET LM ERICSSON (PUBL)) 04 February 2021 (2021-02-04) description, page 22, line 22-page 23, line 30 | 1-7, 31-34 |
| X | CN 112118615 A (HUAWEI TECHNOLOGIES CO., LTD.) 22 December 2020 (2020-12-22) description, paragraphs [0151]-[0244] | 8-15, 31-34 |
| X | CN 113163476 A (ZTE CORP.) 23 July 2021 (2021-07-23) description, paragraphs [0045]-[0611] | 25-27, 31-34 |
| X | WO 2021180206 A1 (MEDIATEK INC.) 16 September 2021 (2021-09-16) description, paragraph [0007] | 28-34 |
| A | CN 109661031 A (HUAWEI TECHNOLOGIES CO., LTD.) 19 April 2019 (2019-04-19) entire document | 1-34 |
| A | CN 110049553 A (CHINA MOBILE COMMUNICATION LTD., RESEARCH INSTITUTE et al.) 23 July 2019 (2019-07-23) entire document | 1-34 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 January 2023** | **28 January 2023** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2022/129572** |

**C.     DOCUMENTS CONSIDERED TO BE RELEVANT**

| Category* | Citation of document, with indication, where appropriate, of the relevant passages | Relevant to claim No. |
|---|---|---|
| A | CN 109392091 A (BEIJING SPREADTRUM HIGH-TECH COMMUNICATIONS TECHNOLOGY CO., LTD.) 26 February 2019 (2019-02-26)<br>        entire document | 1-34 |
| A | EP 2453710 A1 (RESEARCH IN MOTION LIMITED) 16 May 2012 (2012-05-16)<br>        entire document | 1-34 |

Form PCT/ISA/210 (second sheet) (January 2015)

## INTERNATIONAL SEARCH REPORT
### Information on patent family members

| International application No. |
|---|
| **PCT/CN2022/129572** |

| Patent document cited in search report | | | Publication date (day/month/year) | Patent family member(s) | | | Publication date (day/month/year) |
|---|---|---|---|---|---|---|---|
| WO | 2021018531 | A1 | 04 February 2021 | EP | 4008140 | A1 | 08 June 2022 |
| | | | | US | 2022279479 | A1 | 01 September 2022 |
| | | | | CN | 114128367 | A | 01 March 2022 |
| CN | 112118615 | A | 22 December 2020 | WO | 2020253581 | A1 | 24 December 2020 |
| | | | | CN | 112118615 | B | 25 February 2022 |
| | | | | EP | 3975635 | A1 | 30 March 2022 |
| | | | | US | 2022110090 | A1 | 07 April 2022 |
| | | | | EP | 3975635 | A4 | 03 August 2022 |
| | | | | JP | 2022537412 | W | 25 August 2022 |
| CN | 113163476 | A | 23 July 2021 | WO | 2022151979 | A1 | 21 July 2022 |
| WO | 2021180206 | A1 | 16 September 2021 | CN | 115280861 | A | 01 November 2022 |
| CN | 109661031 | A | 19 April 2019 | RU | 2020119785 | A3 | 17 December 2021 |
| | | | | US | 2020280957 | A1 | 03 September 2020 |
| | | | | KR | 20200087830 | A | 21 July 2020 |
| | | | | CN | 109661032 | A | 19 April 2019 |
| | | | | CN | 109803376 | A | 24 May 2019 |
| | | | | EP | 3713316 | A1 | 23 September 2020 |
| | | | | WO | 2019095941 | A1 | 23 May 2019 |
| | | | | BR | 112020009892 | A2 | 03 November 2020 |
| | | | | CN | 109661031 | B | 16 June 2020 |
| | | | | IN | 202037024040 | A | 21 July 2020 |
| | | | | VN | 74679 | A | 25 December 2020 |
| | | | | KR | 102375801 | B1 | 17 March 2022 |
| CN | 110049553 | A | 23 July 2019 | CN | 110049553 | B | 15 July 2022 |
| CN | 109392091 | A | 26 February 2019 | CN | 109392091 | B | 29 October 2021 |
| EP | 2453710 | A1 | 16 May 2012 | CA | 2750554 | A1 | 11 May 2012 |
| | | | | US | 2012122495 | A1 | 17 May 2012 |
| | | | | EP | 2453710 | B1 | 30 October 2013 |
| | | | | CA | 2750554 | C | 14 October 2014 |
| | | | | US | 8897818 | B2 | 25 November 2014 |

Form PCT/ISA/210 (patent family annex) (January 2015)

**REFERENCES CITED IN THE DESCRIPTION**

**Patent documents cited in the description**

- CN 202111309088
- CN 202111365256
- CN 202210134093